# EUROPEAN PATENT APPLICATION

(11) **EP 4 513 847 A1**
(43) Date of publication of application: **26.02.2025**
(21) Application number: 23802593.6
(22) Date of filing: 18.04.2023
(51) Int. Cl.: H04L 45/00

(54) **MULTI-HOP TRANSMISSION METHOD, COMMUNICATION DEVICE AND SYSTEM**

(30) Priority: 10.05.2022 CN 202210504080
(71) Applicant: Huawei Technologies Co., Ltd., Shenzhen, Guangdong 518129 (CN)
(72) Inventor: LI, Zhongfeng, Shenzhen, Guangdong 518129 (CN); FENG, Qi, Shenzhen, Guangdong 518129 (CN)
(74) Representative: Epping - Hermann - Fischer
(86) International application number: PCT/CN2023/089032
(87) International publication number: WO 2023/216818

(57) **Abstract**

This application provides a multi-hop transmission method, and a communication apparatus and system, is applied to the field of communication technologies, and in particular, to a multi-hop transmission scenario. The method includes: A first node determines a second remaining packet delay budget PDB based on a first remaining PDB, where the first remaining PDB is a remaining PDB of a first service; the first node determines a resource selection window based on the second remaining PDB; and the first node selects, in the resource selection window, a resource for transmitting the first service to a second node. The first node is a node on a first path other than a destination node, the first path includes x nodes, and x is an integer greater than or equal to 3. According to this solution, when multi-hop transmission is performed on a service, a node other than the destination node may determine, based on a remaining PDB of the first service, a corresponding remaining PDB for transmitting the first service by the node to a next-hop node. This application provides a solution for determining a remaining PDB for a current hop when each hop node transmits a multi-hop service in a multi-hop transmission scenario.

## Description

This application claims priority to Chinese Patent Application No. 202210504080.9, filed with the China National Intellectual Property Administration on May 10, 2022 and entitled "MULTI-HOP TRANSMISSION METHOD, AND COMMUNICATION APPARATUS AND SYSTEM", which is incorporated herein by reference in its entirety.

### TECHNICAL FIELD

This application relates to the field of communication technologies, and in particular, to a multi-hop transmission method, and a communication apparatus and system.

### BACKGROUND

To increase a coverage area of a communication network, a relay communication mode is used in the communication network, and a remote device can access to a network through forwarding of a relay device. Due to use of relay communication, end-to-end communication between terminal devices may be implemented by using a multi-hop relay device. A service transmitted by using the multi-hop relay device may be referred to as a multi-hop service.

In many communication scenarios, services have specific quality of service (quality of service, QoS) requirements. Therefore, it is necessary to design transmission of multi-hop services to meet the QoS requirements as much as possible.

### SUMMARY

This application provides a multi-hop transmission method, and a communication apparatus and system, to ensure that a QoS requirement is met when each hop node transmits a multi-hop service in a multi-hop transmission scenario.

To achieve the foregoing objective, the following technical solutions are used in this application. According to a first aspect, a multi-hop transmission method is provided. The method may include: First, a first node determines a second remaining packet delay budget PDB based on a first remaining PDB, where the first remaining PDB is a remaining PDB of a first service. Then, the first node determines a resource selection window based on the second remaining PDB. Next, the first node selects, in the resource selection window, a resource for transmitting the first service to a second node. The first node is a node on a first path other than a destination node, the first path includes x nodes, and x is an integer greater than or equal to 3.

According to this solution, during multi-hop transmission, a node (namely, the first node) other than the destination node may determine, based on a remaining PDB of the first service, a corresponding remaining PDB for transmitting the first service by the node to a next-hop node (namely, the second node). This provides a solution for determining a remaining PDB for a current hop when each hop node transmits a multi-hop service in a multi-hop transmission scenario. In this way, in the multi-hop transmission scenario, transmission of the first service can meet a QoS requirement of the first service as much as possible.

With reference to the first solution, in a possible implementation, if the first node is a source node, the method may further include: The first node transmits first signaling to an i^{th} node on the first path, where the first signaling indicates a first moment, and the first moment is a latest moment at which the first service arrives at the destination node, a deadline of the corresponding remaining PDB for transmitting the first service by the source node to the destination node, or a maximum value of a deadline of a resource selection time window of an (x-1)^{th} node. The source node is a 1^{st} node on the first path, the destination node is an x^{th} node on the first path, and i is an integer ranging from 2 to x-1. According to this solution, a relay node on the first path can learn the latest deadline (namely, the first moment) at which the first service arrives at the destination node, so that a subsequent relay node can determine, based on the first moment, a corresponding remaining PDB for sending the first service sent by the relay node.

With reference to the first solution, in a possible implementation, the first signaling may include a time identifier of the first moment, or the first signaling includes a time identifier of a moment at which the first node triggers resource selection and the first remaining PDB, and a time difference between the first moment and the moment at which the first node triggers resource selection is equal to the first remaining PDB. This embodiment of this application provides two manners of indicating the first moment, to improve flexibility of implementing this solution.

With reference to the first solution, in a possible implementation, the method may further include: The first node transmits second signaling to the i^{th} node, where the second signaling includes a first hop count a, and the first hop count a is a hop count of the first service transmitted from the i^{th} node to the destination node along the first path. According to this solution, the relay node on the first path can determine, based on the first moment and the first hop count, the corresponding remaining PDB for sending the first service sent by the relay node.

With reference to the first solution, in a possible implementation, if the first node is not a source node, the method may further include: The first node obtains a first moment; and the first node determines the first remaining PDB, where the first remaining PDB is equal to a time difference between the first moment and a second moment, and the second moment is a start moment or an end moment at which the first node receives a control channel or receives a data channel that carries the first service, the second moment is a moment at which the first node receives the first service and completes decoding, or the second moment is a moment at which the first node obtains the first moment and/or a remaining hop count of the first service on the first path. According to this solution, a relay node on the first path may determine the first remaining PDB with reference to the second moment after obtaining the first moment.

With reference to the first solution, in a possible implementation, duration from the second moment to a deadline of the resource selection window is less than or equal to the second remaining PDB. With reference to the first solution, in a possible implementation, if the first node is a source node, the method further includes: The first node sends third signaling to an i^{th} node on the first path, where the third signaling includes a time identifier of a latest deadline of a resource selection window of the i^{th} node. The source node is a 1^{st} node on the first path, the destination node is an x^{th} node on the first path, i is an integer ranging from 2 to x-1, and the resource selection window of the i^{th} node is used to select a resource for sending the first service to a next-hop node that is of the i^{th} node and that is on the first path. According to this solution, the source node may indicate the latest deadline of the resource selection window of the relay node on the first path.

With reference to the first solution, in a possible implementation, if the first node is a source node, the method may further include: The first node sends fourth signaling to an i^{th} node on the first path, where the fourth signaling includes a time identifier of a moment at which the first node triggers resource selection, the second remaining PDB, and a second hop count b. The source node is a 1^{st} node on the first path, the destination node is an x^{th} node on the first path, and i is an integer ranging from 2 to x-1. According to this solution, the source node sends the moment at which the first node triggers resource selection, the second remaining PDB, and the second hop count b to the relay node, so that the relay node can determine a latest deadline of a resource selection window for transmitting the first service.

With reference to the first solution, in a possible implementation, the method may further include: The first node sends fifth signaling to the i^{th} node, where the fifth signaling includes the second remaining PDB. According to this solution, the relay node may determine, based on the first moment, the first hop count a, and the second remaining PDB, a latest deadline of a resource selection window for transmitting the first service by the relay node.

With reference to the first solution, in a possible implementation, a time difference between the latest deadline of the resource selection window of the i^{th} node and the moment at which the first node triggers resource selection is equal to a product of the second remaining PDB and b, b is the second hop count, and the second hop count is a hop count of the first service transmitted from the source node to the i^{th} node along the first path. According to this solution, time intervals between latest deadlines of resource selection windows that are of the nodes and that are used for transmitting the first service are the same, and are all the second remaining PDB. This is similar to an even-allocation solution.

With reference to the first solution, in a possible implementation, a time difference between the first moment and the latest deadline of the resource selection window of the i^{th} node is equal to a product of the second remaining PDB and a-1. a is the first hop count, the first hop count is the hop count of the first service transmitted from the i^{th} node to the destination node along the first path, the first moment is the latest moment at which the first service arrives at the destination node, the deadline of the corresponding remaining PDB for transmitting the first service by the source node to the destination node, or the maximum value of the deadline of the resource selection time window of the (x-l)^{th} node, and the first hop count is the hop count of the first service transmitted from the i^{th} node to the destination node along the first path.

With reference to the first solution, in a possible implementation, duration from the moment at which the first node triggers resource selection to the deadline of the resource selection window of the first node is less than or equal to the second remaining PDB.

With reference to the first solution, in a possible implementation, the second node is a next-hop node that is of the first node and that is on the first path, the second remaining PDB is equal to a quotient of the first remaining PDB and the remaining hop count of the first service on the first path, and the remaining hop count of the first service on the first path is a hop count of the first service transmitted from the first node to the destination node along the first path.

With reference to the first solution, in a possible implementation, the second node is a next-hop node that is of the first node and that is on the first path, and the second remaining PDB is equal to the first remaining PDB.

With reference to the first solution, in a possible implementation, a latest deadline of resource selection windows from the 1^{st} node to the (x-l)^{th} node on the first path is equal to the first moment.

With reference to the first solution, in a possible implementation, the second node is a next-hop node that is of the first node and that is on a second path, the second path is a path from the first node to a third node, the second path includes y nodes, y is an integer greater than or equal to 3, and the third node is a next-hop node that is of the first node and that is on the first path. That a first node determines a second remaining PDB based on a first remaining PDB may specifically include: The first node determines a third remaining PDB based on the first remaining PDB, and determines the second remaining PDB based on the third remaining PDB, where the third remaining PDB is a corresponding remaining PDB for transmitting the first service by the first node to the third node along the first path. According to this solution, there may be a collaborative path on transmission paths of the first service, and corresponding remaining PDBs for transmitting the first service by nodes on the collaborative path may be determined based on the corresponding remaining PDB for transmitting the first service on a backbone path.

With reference to the first solution, in a possible implementation, the third remaining PDB is equal to a quotient of the first remaining PDB and the hop count of the first service transmitted from the first node to the destination node along the first path.

With reference to the first solution, in a possible implementation, the third remaining PDB is equal to the first remaining PDB.

With reference to the first solution, in a possible implementation, if the first node is not the source node, the third remaining PDB is equal to a time difference between a latest deadline, indicated by the third signaling, of a resource selection window for transmitting the first service by the first node to the third node along the first path and the second moment.

With reference to the first solution, in a possible implementation, if the first node is the source node, the third remaining PDB is equal to a time difference between a latest deadline, indicated by the third signaling, of a resource selection window for transmitting the first service by the first node to the third node along the first path and the moment at which the first node triggers resource selection.

The foregoing four implementations provide possible implementations of determining the third remaining PDB.

With reference to the first solution, in a possible implementation, the second remaining PDB may be equal to a quotient of the third remaining PDB and y-1.

With reference to the first solution, in a possible implementation, the second remaining PDB may be equal to the third remaining PDB.

The foregoing two implementations provide possible implementations of determining the second remaining PDB based on the third remaining PDB.

According to a second aspect, this application provides a communication apparatus. The communication apparatus may be a first node or a chip or a chip system in a first node, or may be a functional module that is in a first node and that is configured to implement the method according to any one of the first aspect or the possible designs of the first aspect. The communication apparatus may implement functions performed by the first node in the foregoing aspects or the possible designs, and the functions may be implemented by hardware executing corresponding software. The hardware or the software includes one or more modules corresponding to the functions. For example, the communication apparatus includes a processing module. The processing module may be configured to determine a second remaining packet delay budget PDB based on a first remaining PDB, where the first remaining PDB is a remaining PDB of a first service. The processing module may be further configured to determine a resource selection window based on the second remaining PDB. The processing module may be further configured to select, in the resource selection window, a resource for transmitting the first service to a second node. The first node is a node on a first path other than a destination node, the first path includes x nodes, and x is an integer greater than or equal to 3.

With reference to the second aspect, in a possible implementation, the communication apparatus may further include a transceiver module. When the first node is a source node, the transceiver module may be configured to transmit first signaling to an i^{th} node on the first path, where the first signaling indicates a first moment, and the first moment is a latest moment at which the first service arrives at the destination node, a deadline of the corresponding remaining PDB for transmitting the first service by the source node to the destination node, or a maximum value of a deadline of a resource selection time window of an (x-1)^{th} node. The source node is a 1^{st} node on the first path, the destination node is an x^{th} node on the first path, and i is an integer ranging from 2 to x-1. With reference to the second aspect, in a possible implementation, the first signaling may include a time identifier of the first moment, or the first signaling includes a time identifier of a moment at which the first node triggers resource selection and the first remaining PDB, and a time difference between the first moment and the moment at which the first node triggers resource selection is equal to the first remaining PDB.

With reference to the second aspect, in a possible implementation, the transceiver module may be further configured to transmit second signaling to the i^{th} node, where the second signaling includes a first hop count a, and the first hop count a is a hop count of the first service transmitted from the i^{th} node to the destination node along the first path.

With reference to the second aspect, in a possible implementation, the communication apparatus may further include a transceiver module. When the first node is not a source node, the transceiver module may be configured to obtain a first moment. The processing module may be further configured to determine the first remaining PDB, where the first remaining PDB is equal to a time difference between the first moment and a second moment, and the second moment is a start moment or an end moment at which the first node receives a control channel or receives a data channel that carries the first service, or the second moment is a moment at which the first node obtains the first moment and/or a remaining hop count of the first service on the first path.

With reference to the second aspect, in a possible implementation, the communication apparatus may further include a transceiver module. When the first node is a source node, the transceiver module may be configured to send third signaling to an i^{th} node on the first path, where the third signaling includes a time identifier of a latest deadline of a resource selection window of the i^{th} node. The source node is a 1^{st} node on the first path, the destination node is an x^{th} node on the first path, i is an integer ranging from 2 to x-1, and the resource selection window of the i^{th} node is used to select a resource for sending the first service to a next-hop node that is of the i^{th} node and that is on the first path.

With reference to the second aspect, in a possible implementation, the communication apparatus may further include a transceiver module. When the first node is a source node, the transceiver module may be configured to send fourth signaling to an i^{th} node on the first path, where the fourth signaling includes a time identifier of a moment at which the first node triggers resource selection, the second remaining PDB, and a second hop count b. The source node is a 1^{st} node on the first path, the destination node is an x^{th} node on the first path, and i is an integer ranging from 2 to x-1.

With reference to the second aspect, in a possible implementation, the transceiver module may be further configured to send fifth signaling to the i^{th} node on the first path, where the fifth signaling includes the second remaining PDB.

With reference to the second aspect, in a possible implementation, a time difference between the latest deadline of the resource selection window of the i^{th} node and the moment at which the first node triggers resource selection is equal to a product of the second remaining PDB and b, b is the second hop count, and the second hop count is a hop count of the first service transmitted from the source node to the i^{th} node along the first path.

With reference to the second aspect, in a possible implementation, a time difference between the first moment and the latest deadline of the resource selection window of the i^{th} node is equal to a product of the second remaining PDB and a-1. a is the first hop count, the first hop count is the hop count of the first service transmitted from the i^{th} node to the destination node along the first path, the first moment is the latest moment at which the first service arrives at the destination node, the deadline of the corresponding remaining PDB for transmitting the first service by the source node to the destination node, or the maximum value of the deadline of the resource selection time window of the (x-l)^{th} node, and the first hop count is the hop count of the first service transmitted from the i^{th} node to the destination node along the first path.

With reference to the second aspect, in a possible implementation, the second node may be a next-hop node that is of the first node and that is on the first path, the second remaining PDB may be equal to a quotient of the first remaining PDB and the remaining hop count of the first service on the first path, and the remaining hop count of the first service on the first path is a hop count of the first service transmitted from the first node to the destination node along the first path.

With reference to the second aspect, in a possible implementation, the second node may be a next-hop node that is of the first node and that is on the first path, and the second remaining PDB may be equal to the first remaining PDB.

With reference to the second aspect, in a possible implementation, a latest deadline of resource selection windows from the 1^{st} node to the (x-l)^{th} node on the first path is equal to the first moment. With reference to the second aspect, in a possible implementation, the second node is a next-hop node that is of the first node and that is on a second path, the second path is a path from the first node to a third node, the second path includes y nodes, y is an integer greater than or equal to 3, and the third node is a next-hop node that is of the first node and that is on the first path. That the processing module is configured to determine a second remaining PDB based on a first remaining PDB specifically includes: The processing module may be configured to: determine a third remaining PDB based on the first remaining PDB, and determine the second remaining PDB based on the third remaining PDB, where the third remaining PDB is a corresponding remaining PDB for transmitting the first service by the first node to the third node along the first path.

For technical effects of the second aspect, refer to the first aspect. Details are not described herein again.

According to a third aspect, a communication device is provided, including a processor. The processor is configured to be coupled to a memory; and after reading computer instructions stored in the memory, perform the method in the first aspect according to the instructions.

In a possible implementation, the communication device further includes the memory, and the memory is configured to store the computer instructions.

In a possible implementation, the communication device further includes a communication interface, and the communication interface is used by the communication device to communicate with another device. For example, the communication interface may be a transceiver, an input/output interface, an interface circuit, an output circuit, an input circuit, a pin, a related circuit, or the like.

In a possible implementation, the communication device may be a chip or a chip system. When the communication device is a chip system, the communication device may include a chip, or may include a chip and another discrete device.

In a possible implementation, when the communication device is a chip or a chip system, the communication interface may be an input/output interface, an interface circuit, an output circuit, an input circuit, a pin, a related circuit, or the like of the chip or the chip system. The processor may be alternatively embodied as a processing circuit or a logic circuit.

According to a fourth aspect, a computer-readable storage medium is provided. The computer-readable storage medium stores instructions. When the instructions are run on a computer, the computer is enabled to perform the method in the first aspect or the second aspect.

According to a fifth aspect, a computer program product including instructions is provided. When the computer program product is run on a computer, the computer is enabled to perform the method in the first aspect or the second aspect.

For technical effects brought by any one of the possible implementations in the third aspect to the fifth aspect, refer to the technical effects brought by different implementations in the first aspect. Details are not described herein again.

### BRIEF DESCRIPTION OF DRAWINGS

FIG. 1 is a diagram of resource selection based on an LBT mechanism according to an embodiment of this application;
FIG. 2 is a diagram of a structure of a communication system according to an embodiment of this application;
FIG. 3 is a diagram of a structure of another communication system according to an embodiment of this application;
FIG. 4 is a diagram of a structure of still another communication system according to an embodiment of this application;
FIG. 5 is a diagram of a structure of a communication device according to an embodiment of this application;
FIG. 6 is a flowchart of a multi-hop transmission method according to an embodiment of this application;
FIG. 7 is a diagram in which nodes determine corresponding remaining PDBs for transmitting a first service according to an embodiment of this application;
FIG. 8 is another diagram in which nodes determine corresponding remaining PDBs for transmitting a first service according to an embodiment of this application;
FIG. 9 is still another diagram in which nodes determine corresponding remaining PDBs for transmitting a first service according to an embodiment of this application; and
FIG. 10 is a diagram of a structure of a communication apparatus according to an embodiment of this application.

### DESCRIPTION OF EMBODIMENTS

Before embodiments of this application are described, technical terms and related technologies in this application are interpreted and described. It should be noted that the following interpretations and descriptions are intended to facilitate understanding of embodiments of this application, and should not be construed as any limitation on the protection scope claimed in embodiments of this application.

Multi-hop relay communication: With evolution of wireless communication standards, from a 4th generation (generation, G) communication system to a 5G communication system and a 6G communication system, frequencies supported by the communication systems gradually increase from a centimeter wave to a millimeter wave, a terahertz wave, and even visible light communication. As a frequency used by a communication network increases, a loss of a path for communication between a terminal and an access network device increases, and a coverage area of the access network device decreases. To maintain coverage of the access network device to some extent, an implementation is proposed to increase transmit power of the access network device. However, the method is limited by a device size, an energy loss, and a radiation indicator. Another manner is proposed to increase a quantity of antennas of the access network device, to form an antenna array and obtain a beamforming gain. However, coverage provided by increasing the power and by using the array antenna is still quite limited. To tackle a problem of limited coverage of the access network device, devices may communicate with each other through 2-hop or more-hop relay transmission. This communication mode may be referred to as multi-hop relay communication.

Listen before talk (listen before talk, LBT) mechanism: LBT is a channel access mechanism that enables wireless local area networks to effectively share spectrum resources. Because availability of a channel on an unlicensed frequency band cannot be ensured at all times, in the LBT mechanism, a device needs to sense a channel before transmitting data and perform clear channel assessment (clear channel assessment, CCA), to ensure that data is transmitted when the channel is idle. This can avoid a channel access conflict and implement channel spectrum sharing.

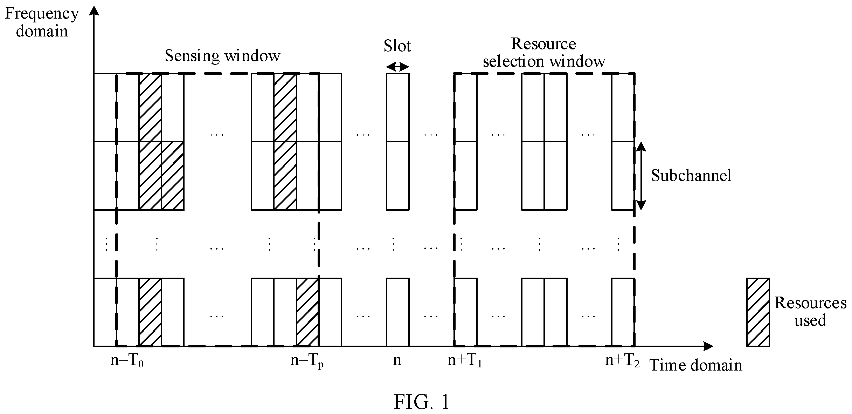

For example, FIG. 1 is a diagram of resource selection based on an LBT mechanism. It should be understood that a device may keep sensing a time-frequency resource of a channel before triggering resource selection. As shown in FIG. 1, assuming that the device triggers resource selection in a slot n, the device may determine a duration from a slot (slot) n-T₀ to a slot n-Tₚ as a sensing window (sensing window), and may determine idle statuses of resources in the sensing window. In this way, the device can determine a resource selection window of the device based on duration of the sensing window and the idle statuses of the resources in the sensing window. As shown in FIG. 1, the device may determine a duration from a slot n+T₁ to a slot n+T₂ as a resource selection window, and the device may use a resource in the resource selection window to transmit data. T₁ is related to performance of the device, T₁ may be a preconfigured value, T₂ is related to a remaining packet delay budget (packet delay budget, PDB) for transmitting the data by the device, and a time difference between a latest moment of n+T₂ and the moment n is equal to a remaining PDB of the data.

In a communication network, devices whose locations are adj acent may use a same time-frequency resource, and consequently different services carried by different devices perform resource contention. In addition, a device may carry a plurality of different services, so that the plurality of different services on the device also perform resource contention. In this case, the device may determine resource selection for each service based on a priority of the service, and preferentially select a resource for a high-priority service to perform transmission.

In an implementation, a corresponding remaining PDB for transmitting a service by a current device may be used as a parameter for determining a priority of the service by the current device. For example, a shorter corresponding remaining PDB for transmitting a service by the current device indicates a higher priority of the service determined by the current device, and a longer corresponding remaining PDB for transmitting a service by the current device indicates a lower priority of the service determined by the current device. This manner can ensure that each service meets a delay budget requirement.

However, in a multi-hop relay communication scenario, a service needs to use multi-hop relays to arrive at a destination device. In this case, during transmission of a multi-hop service, with respect to whether the device determines a priority of the service based on a total remaining PDB of the service or based on a remaining PDB for transmitting the service by a current device, there is no related solution mechanism at present. Therefore, how a multi-hop service and a non-multi-hop service on a same device perform resource contention and multi-hop services and non-multi-hop services between different devices perform resource contention is an urgent problem to be resolved. Based on the foregoing problem, this application proposes a multi-hop transmission method, and provides a method for determining a remaining PDB for a current hop and a resource selection window by each node on a transmission path in a multi-hop transmission scenario. In this way, the nodes can perform resource contention based on related parameters determined for a multi-hop service.

The following describes technical solutions in embodiments of this application with reference to accompanying drawings in embodiments of this application. In descriptions of this application, unless otherwise specified, "/" indicates an "or" relationship between associated objects. For example, A/B may represent A or B. In this application, "and/or" describes only an association relationship for describing associated objects and indicates that three relationships may exist. For example, A and/or B may indicate the following three cases: Only A exists, both A and B exist, and only B exists. A and B each may be in a singular or plural form. In addition, in the descriptions of this application, unless otherwise specified, "a plurality of" means two or more than two. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form. Moreover, for ease of clear description of the technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity or an execution sequence, and that the terms such as "first" and "second" do not indicate a definite difference. Furthermore, in embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the term "example", "for example", or the like is intended to present a related concept in a specific manner for ease of understanding.

First, communication systems and application scenarios to which the multi-hop transmission method provided in this application is applied are described.

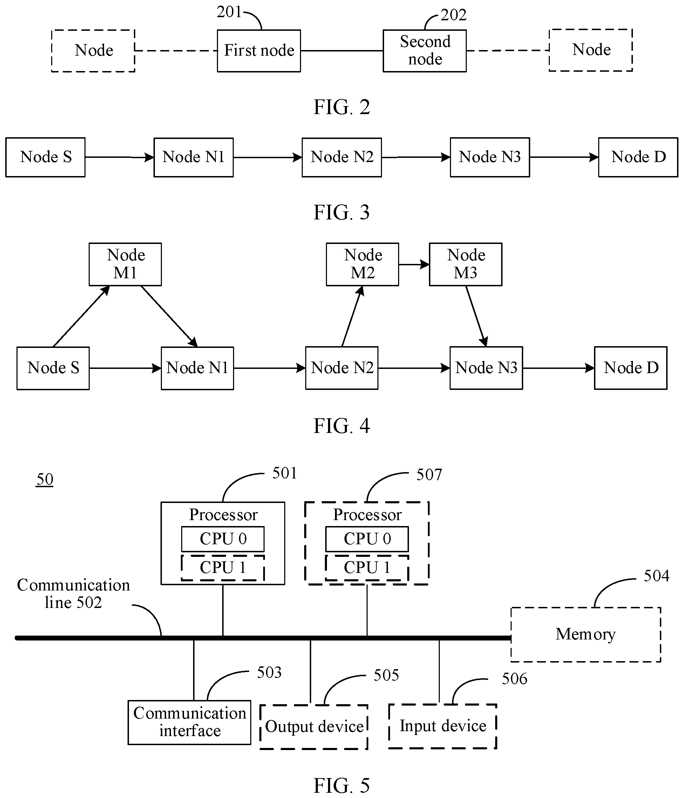

FIG. 2 is a diagram of a communication system according to an embodiment of this application. As shown in FIG. 2, the communication system may include a first node 201 and a second node 202, and the first node 201 may transmit data to the second node 202. Optionally, the data transmitted by the first node 201 to the second node 202 may be data of a multi-hop service. The second node 202 may be a destination node of the data, or may not be a destination node of the data. The first node 201 may be a source node of the data, or may not be a source node of the data. For example, as shown in FIG. 2, there may be another node before the first node and/or after the second node.

FIG. 3 is a diagram of another communication system according to an embodiment of this application. As shown in FIG. 3, in the communication system, a node S, a node N1, a node N2, a node N3, and a node D are sequentially connected. The node S may be a source node for data transmission, the node D may be a destination node for data transmission, and the node N1, the node N2, and the node N3 may be relay nodes for data transmission. Data sent from the node S may be relayed by the node N1, the node N2, and the node N3, and finally arrive at the node D. FIG. 4 is a diagram of still another communication system according to an embodiment of this application. As shown in FIG. 4, in the communication system, a node S, a node N1, a node N2, a node N3, and a node D are sequentially connected. The node S may be a source node for data transmission, the node D may be a destination node for data transmission, and the node N1, the node N2, and the node N3 may be relay nodes for data transmission. In addition, the node S may also be connected to the node N1 through a node M1, and the node N2 may also be connected to the node N3 through a node M2 and a node M3. A path "node S→node M1→node N1" may be considered as a collaborative path of a path "node S→node N1". When transmitting data to the node N1, the node S may perform transmission by using the path "node S→node N1", or may perform transmission by using the path "node S→node M1→node N1". A path "node N2→node M2→node M3 -node N3" may be considered as a collaborative path of a path "node N2→node N3". When transmitting data to the node N3, the node N2 may perform transmission by using the path "node N2→node N3", or may perform transmission by using the path "node N2→node M2→node M3→node N3".

Optionally, in the communication systems shown in FIG. 3 and FIG. 4, the source node (for example, the node S) and the destination node (for example, the node D) may be terminal devices, and the relay nodes (for example, the node N1, the node N2, and the node N3) may be terminal devices or access network devices.

The technical solutions in embodiments of this application can be applied to various communication systems, for example, non-terrestrial network (non-terrestrial network, NTN) systems such as a satellite communication system, high altitude platform station (high altitude platform station, HAPS) communication, and an uncrewed aerial vehicle, an integrated communication and navigation (integrated communication and navigation, IcaN) system, a global navigation satellite system (global navigation satellite system, GNSS), an ultra-dense low-orbit satellite communication system, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS), an LTE system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WiMAX) communication system, a 5th generation (5th generation, 5G) system, a future evolved communication system, and vehicle-to-X (vehicle-to-X V2X). The V2X may include a vehicle-to-network (vehicle to network, V2N), vehicle-to-vehicle (vehicle to vehicle, V2V), vehicle-to-infrastructure (vehicle to infrastructure, V2I), vehicle-to-pedestrian (vehicle to pedestrian, V2P), long term evolution-vehicle (long term evolution-vehicle, LTE-V), an internet of vehicles, machine type communication (machine type communication, MTC), an internet of things (Internet of things, IoT), long term evolution-machine type communication (long term evolution-machine, LTE-M), machine-to-machine (machine to machine, M2M), and the like. The communication systems in FIG. 3 and FIG. 4 may belong to the foregoing various communication systems.

It should be understood that the quantities of nodes shown in FIG. 3 and FIG. 4 are merely examples. Certainly, a communication network may alternatively include another quantity of nodes. For example, there may be only one relay node between the node S and the node D. FIG. 3 and FIG. 4 are merely diagrams, and do not constitute any limitation on communication systems protected in embodiments of this application.

It should be noted that the communication systems and the application scenarios described in embodiments of this application are intended to describe the technical solutions in embodiments of this application more clearly, but do not constitute any limitation on the technical solutions provided in embodiments of this application. A person of ordinary skill in the art can know that as the communication systems evolve and new application scenarios emerge, the technical solutions provided in embodiments of this application are also applicable to similar technical problems.

A terminal device in embodiments of this application may also be referred to as user equipment (user equipment, UE), a mobile station (mobile station, MS), a mobile terminal (mobile terminal, MT), or the like, and is a device with data connectivity. For example, the terminal device is a handheld device or a vehicle-mounted device, or the like with a wireless connection function. The terminal device may be specifically a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), an uncrewed aerial vehicle, a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G communication network or a communication network evolved from 5G, or the like. This is not limited in embodiments of this application.

An access network device in embodiments of this application may be a device in a wireless communication network, for example, a radio access network (radio access network, RAN) node that connects a terminal device to the wireless communication network. Currently, examples of some RAN nodes are: a next generation NodeB (generation NodeB, gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, home evolved NodeB or home NodeB, HNB), a base band unit (base band unit, BBU), a wireless fidelity (wireless fidelity, Wi-Fi) access point (access point, AP), a network side device in a 5G communication network or a communication network evolved from 5G, or the like.

Optionally, the first node, the second node, or another node in the communication system in embodiments of this application may be a communication device, and the first node, the second node, or the another node in the communication system may use a composition structure shown in FIG. 5 or include components shown in FIG. 5. FIG. 5 is a diagram of a structure of a communication device 50 according to an embodiment of this application. As shown in FIG. 5, the communication device 50 includes one or more processors 501, a communication line 502, and at least one communication interface (that a communication interface 503 and one processor 501 are included in FIG. 5 is merely used as an example for description), and optionally may further include a memory 504.

The processor 501 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 502 may include a path used for communication between different components.

The communication interface 503 may be a transceiver module configured to communicate with another device or a communication network, for example, an Ethernet, a RAN, or a wireless local area network (wireless local area network, WLAN). For example, the transceiver module may be an apparatus like a transceiver. Alternatively, the communication interface 503 may be a transceiver circuit located in the processor 501, and is configured to implement signal input and signal output of the processor.

The memory 504 may be an apparatus with a storage function. For example, the memory 504 may be a read-only memory (read-only memory, ROM), another type of static storage device that can store static information and instructions, a random access memory (random access memory, RAM), or another type of dynamic storage device that can store information and instructions; or may be an electrically erasable programmable read-only memory (electrically erasable programmable read-only memory, EEPROM), a compact disc read-only memory (compact disc read-only memory, CD-ROM), other compact disc storage, optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of instructions or a data structure and that is accessible to a computer. However, this is not limited thereto. The memory may exist independently, and is connected to the processor through the communication line 502. Alternatively, the memory may be integrated with the processor.

The memory 504 is configured to store computer-executable instructions for performing the solutions in this application, and the processor 501 controls execution of the solutions. The processor 501 is configured to execute the computer-executable instructions stored in the memory 504, to implement the multi-hop transmission method provided in embodiments of this application. Optionally, in this embodiment of this application, the processor 501 may perform processing-related functions in the multi-hop transmission method provided in the following embodiment of this application, and the communication interface 503 is responsible for communicating with another device or a communication network. This is not specifically limited in embodiments of this application.

Optionally, the computer-executable instructions in this embodiment of this application may also be referred to as application program code. This is not specifically limited in embodiments of this application.

During specific implementation, in an embodiment, the processor 501 may include one or more CPUs, for example, a CPU 0 and a CPU 1 in FIG. 5.

During specific implementation, in an embodiment, the communication device 50 may include a plurality of processors, for example, the processor 501 and a processor 507 in FIG. 5. Each of these processors may be a single-core (single-core) processor, or may be a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each type of computing device may include one or more cores for executing software instructions to perform computation or processing.

During specific implementation, in an embodiment, the communication device 50 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, a projector (projector), or the like. The input device 506 communicates with the processor 501, and may receive a user input in a plurality of manners. For example, the input device 506 may be a mouse, a keyboard, a touchscreen device, a sensing device, or the like.

The communication device 50 may also be referred to as a communication apparatus sometimes, and may be a general-purpose device or a dedicated device. For example, the communication device 50 may be a network device like a router, a switch, or a gateway, or may be a terminal device, a controller in a network, or a device having a structure similar to that in FIG. 5. A type of the communication device 50 is not limited in embodiments of this application.

With reference to FIG. 1 to FIG. 5, the following describes the multi-hop transmission method provided in embodiments of this application. Devices in the following embodiments may have components shown in FIG. 5. Actions, terms, and the like in embodiments of this application may be mutually referenced. This is not limited. In embodiments of this application, a message name, a parameter name in a message, or the like is merely an example. During specific implementation, other names may be used. This is not limited.

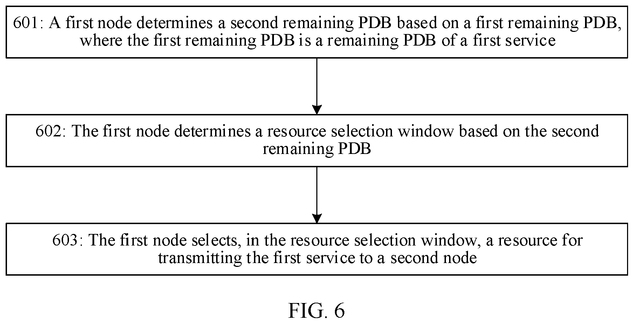

FIG. 6 is a flowchart of a multi-hop transmission method according to an embodiment of this application. As shown in FIG. 6, the multi-hop transmission method may include the following steps.

Step 601: A first node determines a second remaining PDB based on a first remaining PDB, where the first remaining PDB is a remaining PDB of a first service.

The first node is a node on a first path other than a destination node, the first path includes x nodes, and x is an integer greater than or equal to 3. It can be learned that the multi-hop transmission method in this embodiment of this application can be applied to a scenario of performing multi-hop transmission on a service, and the first service may be a multi-hop service. The communication system shown in FIG. 3 or FIG. 4 is used as an example. The first path may be: node S→node N1→node N2→node N3→node D, the first service may be a service sent by the node S to the node D, and the first node may be the node S, the node N1, the node N2, or the node N3. Optionally, it is assumed that a source node is a 1^{st} node on the first path, and the destination node is an x^{th} node on the first path. Because the first node is the node on the first path other than the destination node, the first node is a node in the 1^{st} node to an (x-1)^{th} node on the first path. The 2^{nd} node to the (x-l)^{th} node are nodes on the first path other than the source node and the destination node. Therefore, the 2^{nd} node to the (x-1)^{th} node may be considered as relay nodes on the first path. It should be noted that the first remaining PDB is the remaining PDB of the first service, and the remaining PDB of the first service is a remaining value of a total PDB of the first service. The total PDB of the first service is a delay requirement for transmitting the first service by the source node to the destination node, and may also be referred to as the corresponding remaining PDB for transmitting the first service by the source node to the destination node. In this embodiment of this application, the first remaining PDB can be understood as the remaining value of the total PDB of the first service when the first node selects a resource to transmit the first service.

Step 602: The first node determines a resource selection window based on the second remaining PDB.

The second remaining PDB can be understood as a corresponding remaining PDB for transmitting the first service by the first node to a next-hop node.

Step 603: The first node selects, in the resource selection window, a resource for transmitting the first service to a second node.

The second node can be understood as the next-hop node to which the first node transmits the first service. For example, in FIG. 3, assuming that the first node is the node S, the second node may be the node N1; or assuming that the first node is the node N1, the second node may be the node N2. For another example, in FIG. 4, assuming that the first node is the node S, the second node may be the node N1 or the node M1; assuming that the first node is the node N1, the second node may be the node N2; or assuming that the first node is the node N2, the second node may be the node N3 or the node M2.

In the multi-hop transmission method in this embodiment of this application, the first node may determine, based on the remaining value of the total PDB of the first service (namely, the first remaining PDB), a corresponding remaining PDB (namely, the second remaining PDB) for transmitting the first service by the first node to the next-hop node, and then transmit the first service based on the determined second remaining PDB.

In summary, the multi-hop transmission method provided in this application can be applied to a multi-hop service transmission scenario. During multi-hop transmission, a node (namely, the first node) other than the destination node may determine, based on a remaining value of the total PDB of the first service (namely, the first remaining PDB), a corresponding remaining PDB for transmitting the first service by the node to the next-hop node (namely, the second node). This provides a solution for determining a remaining PDB for a current hop when each hop node transmits a multi-hop service in a multi-hop transmission scenario.

Based on this, when another service performs resource contention with the multi-hop service, a current node may contend for a resource based on a remaining PDB for a current hop of the multi-hop service, so that the node can properly allocate the communication resource.

In a first implementation, in step 601 to step 603, the first node is any one of the 1^{st} node to the (x-1)^{th} node on the first path. In other words, the first node may be the source node or a relay node on the first path (the 2nd node to the (x-1)^{th} node may be referred to as relay nodes). The second node may be a next-hop node that is of the first node and that is on the first path. The second remaining PDB may be equal to a quotient of the first remaining PDB and a remaining hop count of the first service on the first path, and the remaining hop count of the first service on the first path is a hop count of the first service transmitted from the first node to the destination node along the first path.

It should be noted that if the first node is the source node, when sending the first service, the first node first needs to transmit the first service from a higher layer (for example, an application layer) to a bottom layer (for example, a radio link control (radio link control, RLC) layer, a media access control (media access control, MAC) layer, or a physical (physical, PHY) layer), and then transmits the first service to the next-hop node. In this embodiment of this application, if the first node is the source node, when the first node triggers resource selection, the first service has arrived at the bottom layer, and the first remaining PDB does not include time spent in transmitting the first service from the higher layer to the bottom layer.

It can be learned that in the first implementation, all the nodes on the first path except the destination node may determine second remaining PDBs based on first remaining PDBs and remaining hop counts of the first service on the first path.

The communication system shown in FIG. 3 or FIG. 4 is used as an example. The first path may be: node S→node N1→node N2→node N3→node D, the first node is the node S, and the second node is the node N1; the first node is the node N1, and the second node is the node N2; or the first node is the node N2, and the second node is the node N3.

Optionally, when the first node is the source node, duration from a moment at which the first node triggers resource selection to a deadline of the resource selection window of the first node is less than or equal to the second remaining PDB determined by the first node.

Optionally, in the first implementation, when the first node is the source node, the first node may transmit first signaling to an i^{th} node on the first path, where the first signaling indicates a first moment, and i is an integer ranging from 2 to x-1. The 2^{nd} node to the (x-1)^{th} node on the first path are relay nodes on the first path. In other words, the source node may send the first signaling to the relay nodes on the first path. For example, in FIG. 3 or FIG. 4, the first node may be the node S, and the node S may send the first signaling to the node N1, the node N2, the node N3, and a node N4.

The first moment is a deadline of the corresponding remaining PDB for transmitting the first service by the source node to the destination node, the first moment is a latest moment at which the first service arrives at the destination node, the first moment is a latest moment at which a resource for transmitting the first service arrives at the destination node, or the first moment is a maximum value of a deadline of a resource selection time window of the (x-1)^{th} node. The foregoing descriptions of the first moment are equivalent to each other. It should be understood that the corresponding remaining PDB for transmitting the first service by the source node to the destination node may be corresponding to one start moment and one deadline. The first service is sent after the start moment. A delay budget requirement is met only when the first service or the resource for transmitting the first service arrives at the destination node before or upon the deadline.

In this case, the deadline of the corresponding remaining PDB for transmitting the first service by the source node to the destination node is the latest moment at which the first service arrives at the destination node. In addition, because multi-hop transmission is performed on the first service, and the first service is finally transmitted by the (x-1)^{th} node to the destination node (the x^{th} node), the deadline of the corresponding remaining PDB for transmitting the first service by the source node to the destination node is the maximum value of the deadline of the resource selection time window of the (x-1)^{th} node.

Optionally, when the first node is the source node, the start moment of the first remaining PDB may be the moment at which the first node triggers resource selection, and the deadline of the first remaining PDB may be the first moment.

Optionally, the first signaling may indicate the first moment in a plurality of manners. In an implementation, the first signaling may directly indicate the first moment. For example, the first signaling may include a time identifier of the first moment. In another implementation, the first signaling may include a time identifier of the moment at which the first node triggers resource selection and the first remaining PDB corresponding to the first node, and a time difference between the first moment and the moment at which the first node triggers resource selection is equal to the first remaining PDB corresponding to the first node. In this case, the i^{th} node on the first path may determine the first moment based on the moment at which the first node triggers resource selection and the first remaining PDB corresponding to the first node. This indication manner by using other parameters may be considered as an indirect indication.

In this embodiment of this application, the time identifier may be a frame (frame) number, a subframe (subframe) number, a slot (slot) index, a symbol (symbol) index, or the like.

Optionally, in the first implementation, when the first node is the source node, the first node may further transmit second signaling to the i^{th} node on the first path, where the second signaling includes a first hop count a, and the first hop count a is a hop count of the first service transmitted from the i^{th} node to the destination node along the first path.

Optionally, a manner of notifying the first moment by using the first signaling and notifying the first hop count a by using the second signaling may be considered as a notification manner by using separate signaling. Certainly, the first moment and the first hop count a may be alternatively notified by using a same piece of signaling. This is not limited in this application.

Optionally, the first signaling and the second signaling may be directly sent by the first node to the i^{th} node on the first path, or may be transmitted hop by hop from the first node to the i^{th} node on the first path. This is not limited in this application.

Optionally, the first signaling and the second signaling each may be physical layer signaling, a MAC control element (control element, CE) (namely, a MAC CE), or radio resource control (radio resource control, RRC) signaling. Optionally, if the first signaling and the second signaling are physical layer signaling, the first signaling and the second signaling may be sidelink control information (sidelink control information, SCI).

Optionally, in the first implementation, when the first node is a relay node on the first path, before step 601, the method may further include the following steps:
Step 604: The first node obtains a first moment.

Optionally, the first node may receive first signaling from the source node or a previous-hop node, and determine the first moment based on the first signaling. For example, the first signaling carries a time identifier of the first moment, so that the first node can directly determine the first moment. For another example, the first signaling carries a time identifier of a moment at which the source node triggers resource selection and a first remaining PDB corresponding to the source node, so that the first node can determine the first moment based on the moment at which the source node triggers resource selection and the first remaining PDB corresponding to the source node. A time difference between the first moment and the moment at which the source node triggers resource selection is equal to the first remaining PDB corresponding to the source node.

Step 605: The first node determines the first remaining PDB, where the first remaining PDB is equal to a time difference between the first moment and a second moment. The second moment may be a start moment or an end moment at which the first node receives a control channel or receives a data channel that carries the first service, the second moment may be a moment at which the first node receives the first service and completes decoding, or the second moment may be a moment at which the first node obtains the first moment and/or the remaining hop count of the first service on the first path.

In other words, in the first implementation, when the first node is a relay node on the first path, the first node may determine the remaining value of the total PDB of the first service as the first remaining PDB at the start moment or the end moment at which the first node receives the control channel or receives the data channel that carries the first service; the first node may determine the remaining value of the total PDB of the first service as the first remaining PDB at the moment at which the first node receives the first service and completes decoding; or the first node may determine the remaining value of the total PDB of the first service as the first remaining PDB when obtaining the first moment and/or the remaining hop count of the first service on the first path.

It should be noted that a control phase and a data transmission phase may be included during transmission of data by a node in the communication system to a next-hop node, and the control phase is used to prepare for data transmission. Some control signaling and/or indication information may be transmitted (for example, the first signaling or the second signaling is transmitted) in the control phase, and control is performed based on the control channel in the control phase. Data is transmitted (for example, the first service is transmitted) based on the data channel in the data transmission phase. In this embodiment of this application, the start moment at which the first node receives the control channel may be a moment at which the first node receives a 1^{st} symbol of the control channel. The end moment at which the first node receives the control channel may be a moment at which the first node receives a last symbol of the control channel. The start moment at which the first node receives the data channel may be a moment at which the first node receives a 1^{st} symbol of the data channel. The end moment at which the first node receives the data channel may be a moment at which the first node receives a last symbol of the data channel.

Optionally, the first signaling or the second signaling and the first service may be separately transmitted, or may be transmitted together. If the first signaling or the second signaling and the first service are transmitted together, the first service may be transmitted by using the data channel in the data transmission phase, and the first signaling or the second signaling may be transmitted by using the control channel in the control phase before the first service is transmitted. Optionally, in the first implementation, when the first node is a relay node on the first path, after receiving first signaling, the first node may further receive second signaling from the source node, where the second signaling may indicate the hop count of the first service transmitted from the first node to the destination node along the first path. Based on this, the first node may determine the second remaining PDB based on the first moment indicated by the source node and the hop count of the first service transmitted from the first node to the destination node along the first path. For example, the second moment is used as a start moment of the first remaining PDB, and the first moment is used as a deadline of the first remaining PDB, so that the first node can determine the first remaining PDB. Further, the first node may determine the second remaining PDB based on the determined first remaining PDB and the hop count of the first service transmitted from the first node to the destination node along the first path.

It should be understood that in the first implementation, when the first node is a relay node on the first path, start moments of the first remaining PDB and the second remaining PDB are the same (both are the second moment). If the first node uses, as the first moment, the moment at which the first moment and the remaining hop count of the first service on the first path are obtained, the first node can immediately determine the first remaining PDB, and can immediately determine the second remaining PDB based on the remaining hop count of the first service on the first path. In this way, a time difference between the second moment and a moment at which the second remaining PDB is determined is short, thereby ensuring a long available time for transmitting the first service in the second remaining PDB. Otherwise, if the first node receives the remaining hop count of the first service on the first path and determines the second remaining PDB at a long moment after the second moment, and the start moment of the second remaining PDB is the second moment, an available time in the second remaining PDB is short.

Optionally, in the first implementation, when the first node is a relay node on the first path, duration from the second moment and a deadline of the resource selection window of the first node is less than or equal to the second remaining PDB.

It should be noted that in the first implementation, although a second remaining PDB corresponding to each node on the first path other than the destination node is equal to a quotient of a first remaining PDB and a remaining hop count of the first service on the first path that are corresponding to the node, a time corresponding to a resource selected by each node in the resource selection window may be less than a second remaining PDB corresponding to the node. In this case, if a node completes transmission of the first service earlier, a second remaining PDB determined by a next-hop node of the node may be greater than a second remaining PDB determined by the node. Values of second remaining PDBs determined by different nodes may be different, and time differences between latest deadlines of resource selection windows that are of different nodes and that are used for transmitting the first service may also be different.

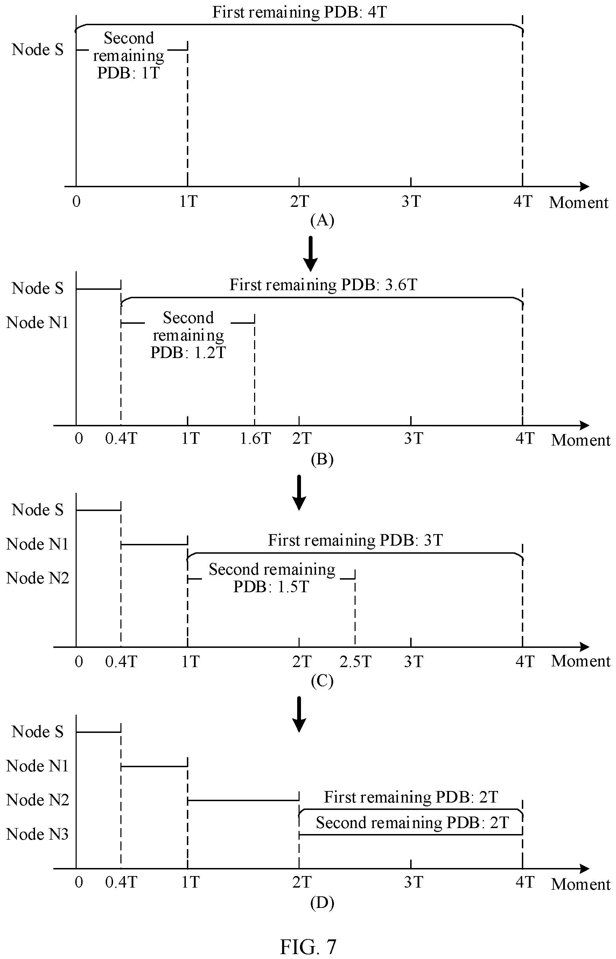

With reference to the communication system shown in FIG. 3 or FIG. 4, the first path "node S→node N1→node N2→node N3→node D" is used as an example. FIG. 7 is a diagram in which nodes determine corresponding remaining PDBs for transmitting a first service. It should be understood that in the first implementation, a corresponding remaining PDB for transmitting the first service by each node is a second remaining PDB determined by the node. As shown in (A) in FIG. 7, assuming that a first remaining PDB corresponding to the node S may be 4T and a remaining hop count of the first service on the first path corresponding to the node S is four hops, a second remaining PDB determined by the node S is 1T. Assuming that a moment at which the node S triggers resource selection is a moment 0, a latest deadline of a resource selection window that is of the node S and that is used for transmitting the first service to a next-hop node is a moment 1T. As shown in (B) in FIG. 7, assuming that the node S transmits the first service to the node N1 at a moment 0.4T, a first remaining PDB corresponding to the node N1 may be 3.6T. In addition, because a remaining hop count of the first service on the first path corresponding to the node N1 is three hops, a second remaining PDB determined by the node N1 may be 1.2T, and a latest deadline of a resource selection window that is of the node N1 and that is used for transmitting the first service to a next-hop node is a moment 1.6T. As shown in (C) in FIG. 7, assuming that the node N1 transmits the first service to the node N2 at a moment 1T, a first remaining PDB corresponding to the node N2 may be 3T. In addition, because a remaining hop count of the first service on the first path corresponding to the node N2 is two hops, a second remaining PDB determined by the node N2 may be 1.5T, and a latest deadline of a resource selection window that is of the node N2 and that is used for transmitting the first service to a next-hop node is a moment 2.5T. As shown in (D) in FIG. 7, assuming that the node N2 transmits the first service to the node N3 at a moment 2T, a first remaining PDB corresponding to the node N3 may be 2T. In addition, because a remaining hop count of the first service on the first path corresponding to the node N2 is one hop, a second remaining PDB determined by the node N3 may be 2T, and a latest deadline of a resource selection window that is of the node N3 and that is used for transmitting the first service to a next-hop node is a moment 4T. It can be learned from FIG. 7 that the second remaining PDBs determined by the node S, the node N1, the node N2, and the node N3 may be different, and time differences of the latest deadlines that are of the resource selection windows and that are determined by the nodes may also be different.

In a second implementation, in step 601 to step 603, the first node is the source node, the second node is a next-hop node that is of the first node and that is on the first path, and the second remaining PDB is equal to a quotient of the first remaining PDB and a remaining hop count of the first service on the first path. For example, in the communication system shown in FIG. 3 or FIG. 4, the first node is the node S, and the second node is the node N1.

In the second implementation, a latest deadline of a resource selection window of each relay node on the first path may be determined and indicated by the source node. For example, in the communication system shown in FIG. 3 or FIG. 4, latest deadlines of resource selection windows of the node N1, the node N2, and the node N3 may be determined and indicated by the node S. Optionally, in the second implementation, the first node (namely, the source node) may determine, based on a hop count corresponding to each relay node in a transmission process of the first service, the latest deadline of the resource selection window that is of each relay node and that is used for transmitting the first service.

For example, a hop count of the first service transmitted from the source node to an i^{th} node along the first path is a second hop count b, and the first node may determine that a time difference between a latest deadline of a resource selection window that is of the i^{th} node and that is used for transmitting the first service and a moment at which the first node triggers resource selection is equal to a product of the second remaining PDB determined by the first node and b.

For another example, a hop count of the first service transmitted from an i^{th} node to the destination node along the first path is a first hop count a, and the first node may determine that a time difference between a latest deadline of a resource selection window that is of the i^{th} node and that is used for transmitting the first service and a first moment is equal to a product of the second remaining PDB determined by the first node and a-1.

It can be learned that in the second implementation, time intervals between latest deadlines of resource selection windows that are of all the nodes on the first path except the destination node and that are used for transmitting the first service may be equal to the second remaining PDB determined by the source node.

Optionally, in the second implementation, the first node may directly indicate the latest deadline of the resource selection window of the i^{th} node on the first path. For example, the first node may send third signaling to the i^{th} node on the first path, where the third signaling may include a time identifier of the latest deadline of the resource selection window of the i^{th} node.

Optionally, in the second implementation, the first node may indirectly indicate the latest deadline of the resource selection window of the i^{th} node on the first path. For example, the first node may send fourth signaling to the i^{th} node on the first path, where the fourth signaling may include a time identifier of the moment at which the first node triggers resource selection, the second remaining PDB determined by the first node, and the second hop count b. In this case, the i^{th} node may determine, based on the moment at which the first node triggers resource selection, the second remaining PDB determined by the first node, and the second hop count b, the latest deadline of the resource selection window that is of the i^{th} node and that is used for transmitting the first service. The time difference between the latest deadline of the resource selection window that is of the i^{th} node and that is used for transmitting the first service and the moment at which the first node triggers resource selection is equal to the product of the second remaining PDB determined by the first node and b.

It should be noted that the time identifier of the moment at which the first node triggers resource selection, the second remaining PDB determined by the first node, and the second hop count b that are included in the fourth signaling may be separately sent by using separate signaling. This is not limited in this application.

Optionally, in the second implementation, the first node may send the first signaling and the second signaling to the i^{th} node on the first path, where the first signaling indicates the first moment, and the second signaling indicates the first hop count a. For content of the first signaling and the second signaling, refer to the foregoing descriptions of the first signaling and the second signaling. Details are not described herein again. In addition, after sending the first signaling and the second signaling, the first node may further send fifth signaling to the i^{th} node on the first path, where the fifth signaling may include the second remaining PDB determined by the first node. After receiving the first signaling, the second signaling, and the fifth signaling, the i^{th} node on the first path may determine, based on the first moment, the first hop count a, and the second remaining PDB determined by the first node, the latest deadline of the resource selection window that is of the i^{th} node and that is used for transmitting the first service. The time difference between the latest deadline of the resource selection window that is of the i^{th} node and that is used for transmitting the first service and the first moment is equal to the product of the second remaining PDB determined by the first node and a-1. This implementation is also a manner in which the first node indirectly indicates the latest deadline of the resource selection window of the i^{th} node on the first path.

Alternatively, in the second implementation, the first moment, the first hop count a, and the second remaining PDB determined by the first node may be carried in same signaling to be sent to the i^{th} node on the first path. This is not limited in this application.

Optionally, the third signaling, the fourth signaling, and the fifth signaling may be directly sent by the source node to the i^{th} node on the first path, or may be transmitted hop by hop to the i^{th} node on the first path. This is not limited in this application.

Optionally, the third signaling, the fourth signaling, and the fifth signaling each may be physical layer signaling, a MAC CE, or RRC signaling. Optionally, if the third signaling, the fourth signaling, and the fifth signaling are physical layer signaling, the third signaling, the fourth signaling, and the fifth signaling may be SCI.

It should be noted that in the second implementation, a corresponding remaining PDB for transmitting the first service by the i^{th} node to a next-hop node is equal to a time difference between a third moment and the latest deadline of the resource selection window that is of the i^{th} node and that is used for transmitting the first service. The third moment may be a start moment or an end moment at which the i^{th} node receives a control channel or receives a data channel that carries the first service, the third moment may be a moment at which the i^{th} node receives the first service and completes decoding, or the third moment may be a moment at which the i^{th} node obtains the latest deadline of the resource selection window that is of the i^{th} node and that is used for transmitting the first service.

Optionally, if the third signaling, the fourth signaling, and the fifth signaling are transmitted hop by hop to the i^{th} node, the third signaling, the fourth signaling, and the fifth signaling may be transmitted in the control phase before the first service is transmitted, and an indication received by the i^{th} node in the control phase before the first service is received may include the third signaling, the fourth signaling, and the fifth signaling.

It should be noted that the nodes may transmit the first service before the latest deadlines, and in the second implementation, the latest deadlines of the resource selection windows that are of the nodes and that are used for transmitting the first service are invariable values determined by the source node. Therefore, if a node transmits the first service earlier, a corresponding remaining PDB for transmitting the first service by a next-hop node of the node is relatively long.

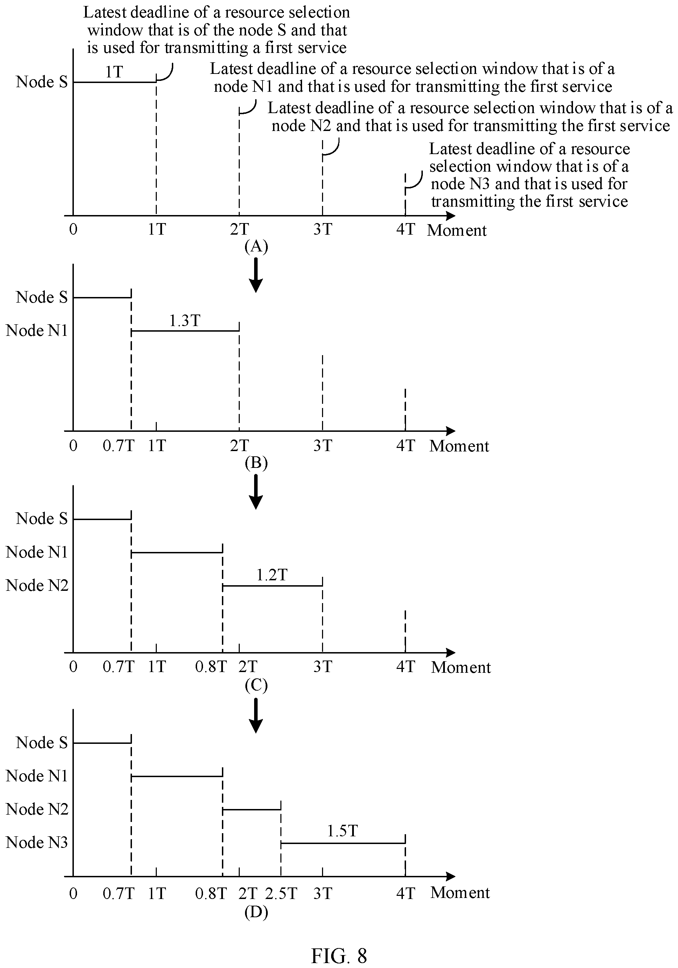

With reference to the communication system shown in FIG. 3 or FIG. 4, the first path "node S→node N1→node N2→node N3→node D" is used as an example. FIG. 8 is another diagram in which nodes determine corresponding remaining PDBs for transmitting a first service. As shown in (A) in FIG. 8, assuming that a first remaining PDB corresponding to the node S may be 4T, a second remaining PDB determined by the node S is 1T. Assuming that the node S triggers resource selection at a moment 0, the node S may determine that a latest deadline of a resource selection window that is of the node S and that is used for transmitting the first service is a moment 1T, a latest deadline of a resource selection window that is of the node N1 and that is used for transmitting the first service is a moment 2T, a latest deadline of a resource selection window that is of the node N2 and that is used for transmitting the first service is a moment 3T, and a latest deadline of a resource selection window that is of the node N3 and that is used for transmitting the first service is a moment 4T. As shown in (B) in FIG. 8, assuming that the node S transmits the first service to the node N1 at a moment 0.7T, a corresponding remaining PDB for transmitting the first service by the node N1 may be 1.3T (that is, a time difference between the moment 2T and the moment 0.7T). As shown in (C) in FIG. 8, assuming that the node N1 transmits the first service to the node N2 at a moment 1.8T, a corresponding remaining PDB for transmitting the first service by the node N2 may be 1.2T (that is, a time difference between the moment 3T and the moment 1.8T). As shown in (D) in FIG. 8, assuming that the node N2 transmits the first service to the node N3 at a moment 2.5T, a corresponding remaining PDB for transmitting the first service by the node N3 to the node D may be 1.5T (that is, a time difference between the moment 4T and the moment 2.5T). It can be learned from FIG. 8 that if the first service is transmitted earlier in a previous hop, a relatively long corresponding remaining PDB may be reserved for a next hop to transmit the first service.

Optionally, in the second implementation, the first node may further determine, based on statuses of links (including link load, link quality, and the like) between the nodes on the first path, the latest deadline of the resource selection window that is of each relay node and that is used for transmitting the first service. In this implementation, the first node may directly indicate the latest deadline of the resource selection window that is of each relay node and that is used for transmitting the first service. For example, the first node may send, to the relay node, a time identifier of the latest deadline of the resource selection window that is of the relay node and that is used for transmitting the first service.

In a third implementation, in step 601 to step 603, the first node is any one of the 1^{st} node to the (x-1)^{th} node on the first path. In other words, the first node may be the source node or a relay node on the first path. The second node may be a next-hop node that is of the first node and that is on the first path. The second remaining PDB may be equal to the first remaining PDB.

It can be learned that in the third implementation, each of the nodes on the first path other than the destination node (that is, the 1^{st} node to the (x-1)^{th} node on the first path) may use a remaining value (namely, a first remaining PDB) of the total PDB of the first service as a corresponding remaining PDB (namely, a second remaining PDB) for transmitting the first service by the node to a next-hop node. In this case, a latest deadline of a resource selection window that is of each node on the first path other than the destination node and that is used for transmitting the first service may be equal to a first moment.

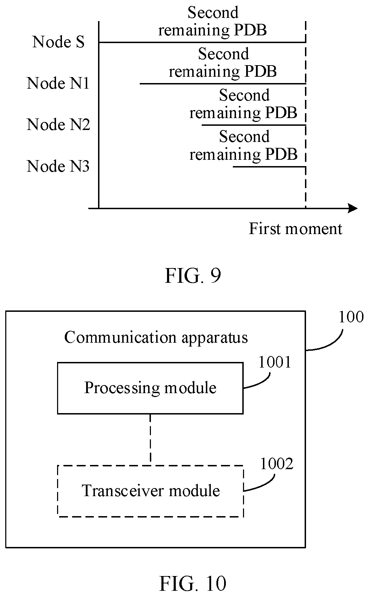

With reference to the communication system shown in FIG. 3 or FIG. 4, the first path "node S→node N1→node N2→node N3→node D" is used as an example. FIG. 9 is still another diagram in which nodes determine corresponding remaining PDBs for transmitting a first service. It should be understood that in the third implementation, the corresponding remaining PDB for transmitting the first service by each node is the second remaining PDB corresponding to the node. As shown in FIG. 9, all latest moments of resource selection windows that are of the node S, the node N1, the node N2, and the node N3 and that are used for transmitting the first service may be the first moment. In this case, the second remaining PDB corresponding to each node may be equal to duration from a moment at which the node receives the first service to the first moment. In this case, the latest moments of the resource selection windows that are of the node S, the node N1, the node N2, and the node N3 and that are used for transmitting the first service are deadlines of the second remaining PDBs determined by the node S, the node N1, the node N2, and the node N3.

Optionally, in the third implementation, when the first node is the source node, the first node may send the first signaling to an i^{th} node (namely, a relay node) on the first path. For content and a sending manner of the first signaling, refer to the foregoing descriptions of the first signaling. Details are not described herein again. In the third implementation, the source node sends the first signaling, so that each relay node may determine the first moment indicated by the first signaling as a latest deadline of a resource selection window that is of the relay node and that is used for transmitting the first service.

Optionally, in the third implementation, when the first node is a relay node on the first path, before step 601, the method may further include the following steps:
Step 606: The first node obtains the first moment.

Step 606 in the third implementation is similar to step 604 in the second implementation. For details, refer to the descriptions of step 604. Details are not described herein again.

Step 607: The first node determines the first remaining PDB, where the first remaining PDB is equal to a time difference between the first moment and a fourth moment. The fourth moment may be a start moment or an end moment at which the first node receives a control channel or receives a data channel that carries the first service, the fourth moment may be a moment at which the first node receives the first service and completes decoding, or the fourth moment may be a moment at which the first node obtains the first moment.

Optionally, in the third implementation, when the first node is the source node, the first node may also send the second signaling to the i^{th} node (namely, a relay node on the first path) on the first path, where the second signaling indicates a first hop count a. In this way, when the implementation is changed from the third implementation to the first implementation or the second implementation, the relay node can determine, based on the first moment and the first hop count, a latest deadline of a resource selection window for transmitting the first service.

It should be noted that in a multi-hop transmission process of the first service, if there is no available candidate resource in a resource selection window that is determined by a node and that is used for transmitting the first service to a next-hop node, the node cannot successfully transmit the first service. Consequently, multi-hop transmission of the first service fails.

Optionally, when multi-hop transmission of the first service is performed, an implementation used by each node can be flexibly changed. For example, a preconfigured implementation of the transmission process of the first service may be the first implementation or the second implementation. If there is no available candidate resource in a resource selection window determined by a node based on the first implementation or the second implementation, the node may use the third implementation instead to determine a resource selection window, that is, the node determines the first moment as a latest deadline of the resource selection window. In other words, when there is no available candidate resource in a resource selection window determined by a node based on the first implementation or the second implementation, the node directly determines a remaining value of the total PDB of the first service as a corresponding remaining PDB for sending the first service by the node to a next-hop node. In this way, in the method, a probability that the node determines an available resource for transmitting the first service can be increased, to ensure as much as possible that the node can successfully send the first service. Optionally, if the preconfigured implementation of multi-hop transmission of the first service is the first implementation or the second implementation, even if a node uses the third implementation instead to select a resource during transmission of the first service, after the node successfully transmits the first service, a next-hop node of the node may still use the first implementation or the second implementation to determine a resource for transmitting the first service.

It should be noted that application scenarios of the first implementation, the second implementation, and the third implementation are all as follows: The second node is the next-hop node that is of the first node and that is on the first path.

Optionally, the second node in step 603 may not be the next-hop node that is of the first node and that is on the first path. For example, in a fourth implementation, the first node is the source node or a relay node on the first path. The second node is a next-hop node that is of the first node and that is on a second path, the second path is a path from the first node to a third node, the second path includes y nodes, y is an integer greater than or equal to 3, and the third node is the next-hop node that is of the first node and that is on the first path. In other words, the second path is a multi-hop path between the first node and the third node that are adjacent to each other on the first path. For example, as shown in FIG. 4, the first node may be the node S, the third node may be the node N1, the second path is "node S→node M1→node N1", and the second node may be the node M1. Alternatively, still with reference to FIG. 4, the first node may be N2, the third node may be N3, the second path may be "node N2→node M2→node M3→node N3", and the second node may be the node M2.

In this embodiment of this application, the first path may be considered as a backbone path, the second path may be considered as a collaborative path, and the collaborative path is used to collaborate on transmission between some directly connected nodes on the backbone path. For example, as shown in FIG. 4, the first path may be: node S→node N1→node N2→node N3→node D, "node S→node M1→node N1" may be the collaborative path of "node S→node N1 ", and "node N2→node M2→node M3→node N3" may be the collaborative path of "node N2→node N3". In this case, during multi-hop transmission, the first service may be directly sent from the node S to the node N1, or may be sent to the node N1 through the collaborative path "node S→node M1→node N1"; and the first service may be directly sent from the node N2 to the node N3, or may be transmitted to the node N3 through the collaborative path "node N2→node M2→node M3→node N3".

It should be noted that existence of the collaborative paths can improve multi-hop transmission efficiency and improve multi-hop transmission reliability. It should be understood that transmission of the first service in parallel on the path "node S→node M1→node N1" and the path "node S→node N1" has a higher transmission rate compared with transmission through only the path "node S→node N1". In addition, if congestion occurs on the path "node S→node N1", the first service may be further transmitted through the path "node S→node M1→node N1". This can improve multi-hop transmission reliability.

Optionally, when the second node is the next-hop node that is of the first node and that is on the second path, step 601 may specifically include the following steps:
6021: The first node determines a third remaining PDB based on the first remaining PDB.

The third remaining PDB is a corresponding remaining PDB for transmitting the first service by the first node to the third node along the first path.

It should be understood that, the third node is the next-hop node that is of the first node and that is on the first path, and in the first implementation to the third implementation, the second node may be the next-hop node that is of the first node and that is on the first path. Therefore, for determining the third remaining PDB, refer to the manners of determining the second remaining PDB in the first implementation to the third implementation.

Optionally, with reference to the first implementation, when the first node is the source node or the first node is a relay node on the first path, the third remaining PDB may be equal to the quotient of the first remaining PDB and the remaining hop count of the first service on the first path. Optionally, with reference to the second implementation, when the first node is the source node, the third remaining PDB may be equal to the quotient of the first remaining PDB and the remaining hop count of the first service on the first path. When the first node is a relay node on the first path, the third remaining PDB may be equal to a time difference between a latest deadline, indicated by the third signaling, of a resource selection window for transmitting the first service by the first node to the third node along the first path and the second moment.

Optionally, with reference to the third implementation, when the first node is the source node or the first node is a relay node on the first path, the third remaining PDB may be equal to the first remaining PDB.

6022: The first node determines the second remaining PDB based on the third remaining PDB.

It should be noted that the third node is the next-hop node that is of the first node and that is on the first path, the second node is the next-hop node that is of the first node and that is on the second path, and the second path is the multi-hop path between the first node and the third node. Therefore, in this embodiment of this application, the corresponding remaining PDB for transmitting the first service by the first node to the third node along the first path (namely, the third remaining PDB) may be used as a corresponding remaining PDB for transmitting the first service by the first node to the third node along the second path.

In the fourth implementation, for example, in the communication system shown in FIG. 4, the first node may be the node S, the second node may be the node M1, the third node may be the node N1, the third remaining PDB is a corresponding remaining PDB for transmitting the first service from the node S to the node N1, and the second remaining PDB is a corresponding remaining PDB for transmitting the first service from the node S to the node M1. Alternatively, the first node may be the node N2, the second node may be the node M2, the third node may be the node N3, the third remaining PDB is a corresponding remaining PDB for transmitting the first service from the node N2 to the node N3, and the second remaining PDB is a corresponding remaining PDB for transmitting the first service from the node N2 to the node M2.

Optionally, for determining the second remaining PDB based on the third remaining PDB, refer to the manners in which the first node determines the second remaining PDB when the first node is the source node and the second node is a next hop that is of the first node and that is on the first path in the first implementation to the third implementation.

Optionally, in the fourth implementation, the second remaining PDB may be equal to a quotient of the third remaining PDB and a hop count of the first service transmitted from the first node to the third node along the second path. Alternatively, the second remaining PDB may be equal to the third remaining PDB.

Optionally, in the fourth implementation, a manner of determining a corresponding remaining PDB for transmitting the first service by a relay node on the second path to a next-hop node that is of the relay node and that is on the second path is the same as the manner of determining a corresponding remaining PDB for transmitting the first service by a relay node on the first path to a next-hop node that is of the relay node and that is on the first path. Therefore, the corresponding remaining PDB for transmitting the first service by the relay node on the second path to the next-hop node that is of the relay node and that is on the second path may be determined with reference to the foregoing descriptions in the first implementation to the third implementation.

The relay node on the second path is a node on the second path other than the first node and the third node. The first node may be a 1^{st} node on the second path, and the third node may be considered as a y^{th} node on the second path. In this case, the relay node may be considered as a j^{th} node on the second path, where j is an integer ranging from 2 to y-1.

Optionally, in the fourth implementation, a corresponding remaining PDB for transmitting the first service by the j^{th} node on the second path to a next-hop node that is of the j^{th} node and that is on the second path may be equal to a quotient of a remaining value of the third remaining PDB at the jth node and a hop count of the first service transmitted from the j^{th} node to the third node along the second path.

It should be understood that the third remaining PDB is a corresponding remaining PDB for transmitting the first service from the first node to the third node along the second path, and in this case, the nodes on the second path consume the third remaining PDB to transmit the first service. Then, the remaining value of the third remaining PDB at the j^{th} node is a remaining available time of the third remaining PDB when the first service is transmitted to the j^{th} node.

Optionally, the first node may send sixth signaling to the j^{th} node on the second path, and the sixth signaling may indicate a fifth moment. The fifth moment is a latest moment at which the first service arrives at the third node along the second path, the fifth moment is a latest moment at which a resource for the first service transmitted along the second path arrives at the third node, the fifth moment is a deadline of the third remaining PDB, or the fifth moment is a maximum value of a deadline of a resource selection window of a (y-1)^{th} node on the second path. The foregoing descriptions of the fifth moment are equivalent to each other.

Optionally, the fifth moment may be indicated in a plurality of manners. For example, the sixth signaling may directly indicate the fifth moment. For example, the first signaling may include a time identifier of the first moment. For another example, if the first node is the source node, the sixth signaling may include a moment at which the first node triggers resource selection and the third remaining PDB, and a time difference between the fifth moment and the moment at which the first node triggers resource selection is equal to the third remaining PDB. In this case, the j^{th} node on the second path may determine the fifth moment based on the moment at which the first node triggers resource selection and the third remaining PDB. For still another example, if the first node is a relay node on the first path, the sixth signaling may include the second moment and the third remaining PDB, and a time difference between the fifth moment and the second moment is equal to the third remaining PDB. In this case, the j^{th} node on the second path may determine the fifth moment based on the second moment and the third remaining PDB. This manner of indicating the fifth moment by using other parameters may be considered as an indirect indication.

It should be understood that the first node indicates the fifth moment to the j^{th} node on the second path, so that the j^{th} node can determine the remaining value of the third remaining PDB at the j^{th} node based on the fifth moment.

Optionally, the j^{th} node on the second path may determine a time difference between the fifth moment and a sixth moment as the remaining value of the third remaining PDB at the j^{th} node. The sixth moment may be a start moment or an end moment at which the j^{th} node on the second path receives a control channel or receives a data channel that carries the first service, the sixth moment may be a moment at which the j^{th} node on the second path receives the first service and completes decoding, or the sixth moment may be a moment at which the j^{th} node on the second path obtains the fifth moment.

Optionally, the first node may further send seventh signaling to the j^{th} node on the second path, where the seventh signaling may indicate a third hop count c, and the third hop count c is the hop count of the first service transmitted from the j^{th} node to the third node along the second path. The first node indicates the third hop count to the j^{th} node on the second path, so that the j^{th} node can determine the second remaining PDB based on the remaining value of the third remaining PDB at the j^{th} node and the third hop count.

Optionally, the fifth moment indicated by the sixth signaling and the third hop count c indicated by the seventh signaling may be notified by using a same piece of signaling. This is not limited in this application.

Optionally, the sixth signaling and the seventh signaling may be directly sent by the first node to the j^{th} node on the second path, or may be transmitted hop by hop from the first node to the j^{th} node on the second path. In addition, the sixth signaling and the seventh signaling each may be physical layer signaling, a MAC CE, or RRC signaling. Optionally, if the sixth signaling and the seventh signaling are physical layer signaling, the sixth signaling and the seventh signaling may be SCI. Optionally, if the sixth signaling and the seventh signaling are transmitted hop by hop to the j^{th} node, the sixth signaling and the seventh signaling may be transmitted in the control phase before the first service is transmitted, and an indication received by the j^{th} node in the control phase before the first service is received may include the sixth signaling and the seventh signaling. Optionally, in the fourth implementation, a latest deadline of a resource selection window for transmitting the first service by the j^{th} node on the second path to the next-hop node that is of the j^{th} node and that is on the second path may be determined and indicated by the first node. Optionally, the first node may determine, based on the third remaining PDB and the hop count corresponding to the j^{th} node on the second path, the latest deadline of the resource selection window for transmitting the first service by the j^{th} node to the next-hop node that is of the j^{th} node and that is on the second path.

For example, the second remaining PDB may be equal to a quotient of the third remaining PDB and y-1. If the first node is the source node, a time difference between "the latest deadline of the resource selection window for transmitting the first service by the j^{th} node on the second path to the next-hop node that is of the j^{th} node and that is on the second path" and "the moment at which the first node triggers resource selection" may be equal to a product of the second remaining PDB and a fourth hop count d. If the first node is a relay node on the first path, a time difference between "the latest deadline of the resource selection window for transmitting the first service by the j^{th} node on the second path to the next-hop node that is of the j^{th} node and that is on the second path" and "the moment at which the first node triggers resource selection" may be equal to a product of the second remaining PDB and a fourth hop count d. The fourth hop count d is a hop count of the first service transmitted from the first node to the j^{th} node along the second path. It can be learned that time intervals between latest deadlines of resource selection windows that are of all the nodes on the second path except the third node and that are used for transmitting the first service may be equal to the second remaining PDB.

Optionally, the first node may send eighth signaling to the j^{th} node on the second path. The eighth signaling may indicate the latest deadline of the resource selection window for transmitting the first service by the j^{th} node on the second path to the next-hop node that is of the j^{th} node and that is on the second path. In an implementation, the eighth signaling may directly carry a time identifier of "the latest deadline of the resource selection window for transmitting the first service by the j^{th} node to the next-hop node that is of the j^{th} node and that is on the second path", for example, a frame number, a subframe number, a slot index, or a symbol index. In another implementation, if the first node is the source node, the eighth signaling may include a time identifier of the moment at which the first node triggers resource selection, the fourth hop count d, and the second remaining PDB. In still another implementation, if the first node is a relay node on the first path, the eighth signaling may include a time identifier of the second moment, the fourth hop count d, and the second remaining PDB.

Optionally, the eighth signaling may be directly sent by the first node to the j^{th} node on the second path, or may be transmitted hop by hop from the first node to the j^{th} node on the second path. In addition, the eighth signaling may be physical layer signaling, a MAC CE, or RRC signaling. Optionally, if the eighth signaling is physical layer signaling, the eighth signaling may be SCI. Optionally, if the eighth signaling is transmitted hop by hop to the j^{th} node, the eighth signaling may be transmitted in the control phase before the first service is transmitted, and the indication received by the j^{th} node in the control phase before the first service is received may include the eighth signaling.

Optionally, after receiving "the latest deadline of the resource selection window for transmitting the first service by the j^{th} node to the next-hop node that is of the j^{th} node and that is on the second path" indicated by the first node, the j^{th} node on the second path may determine the corresponding remaining PDB for transmitting the first service by the j^{th} node to the next-hop node that is of the j^{th} node and that is on the second path. For example, the corresponding remaining PDB for transmitting the first service by the j^{th} node on the second path to the next-hop node that is of the j^{th} node and that is on the second path is equal to a time difference between the latest deadline of the resource selection window that is of the j^{th} node and that is used for transmitting the first service and the sixth moment.

Optionally, the first node may further determine, based on statuses of links (including link load, link quality, and the like) between the nodes on each second path, the latest deadline of the resource selection window for transmitting the first service by the j^{th} node on the second path to the next-hop node that is of the j^{th} node and that is on the second path. In this implementation, the first node may directly indicate the latest deadline of the resource selection window that is of the j^{th} node and that is used for transmitting the first service. For example, the first node may send, to the j^{th} node, a time identifier of the latest deadline of the resource selection window that is of the j^{th} node and that is used for transmitting the first service.

Optionally, in the fourth implementation, the second remaining PDB may be equal to the third remaining PDB, and the corresponding remaining PDB for transmitting the first service by the j^{th} node on the second path to the next-hop node that is of the j^{th} node and that is on the second path may also be equal to the third remaining PDB. In other words, a node on the second path other than the third node may use the corresponding remaining PDB for transmitting the first service by the first node to the third node as a corresponding remaining PDB for transmitting the first service by the node to a next-hop node that is of the node and that is on the second path.

In the fourth implementation, a solution is provided in which when there is a collaborative path on the backbone path for the first service from the source node to the destination node, a node on the collaborative path determines a latest deadline of a resource selection window for transmitting the first service and a corresponding remaining PDB for transmitting the first service.

Optionally, in this embodiment of this application, after determining the corresponding remaining PDBs for transmitting the first service, the nodes on the first path and the second path may proactively send, to another device (for example, UE) around the node in a broadcast or multicast manner, the corresponding remaining PDBs for transmitting the first service by the nodes. Alternatively, the another device may listen to control information sent by the nodes, where the control information may include information about the corresponding remaining PDBs for transmitting the first service by the nodes, and the control information may be sent in a broadcast, multicast, or unicast manner. In this way, the another device can determine, based on the corresponding remaining PDBs for transmitting the first service by the nodes, priorities of transmitting the first service by the nodes, to determine a resource use sequence based on the priorities, thereby implementing proper resource contention. The nodes may indicate, to the another surrounding device by using control signaling, the corresponding remaining PDBs for transmitting the first service by the nodes. For example, the control signaling may be physical layer signaling, RRC signaling, or a MAC CE. Optionally, if the control signaling is physical layer signaling, the control signaling may be SCI.

It should be noted that, in this embodiment of this application, the first path may be referred to as a backbone path for transmitting first service, the nodes on the first path may be referred to as backbone nodes, the source node is a start point for transmitting the first service, and the destination node is an end point for transmitting the first service. Before the first service is transmitted, the source node may send a reference signal to the destination node to test a status of a link between the source node and the destination node. The source node may determine, based on channel quality feedback information, the first path for transmitting the first service. The first path may be a path with a small hop count, low link load, and desirable channel quality (whose average channel quality is desirable, and worst hop channel quality is also desirable in a multi-hop channel).

It should be noted that in this embodiment of this application, the second path may be referred to as a collaborative path, and the nodes on the collaborative path may be referred to as collaborative nodes. The collaborative path is located between backbone nodes, that is, the second path is located between nodes on the first path. Transmission of the first service on the collaborative path may be scheduled by the backbone nodes corresponding to the collaborative path.

In the foregoing method embodiment, the processor 501 in the communication device 50 shown in FIG. 5 may invoke the application program code stored in the memory 504 to instruct the first node to perform actions of the first node.

It can be understood that in the foregoing embodiments, the method and/or the steps implemented by the first node may be alternatively implemented by a component (for example, a chip or a circuit) that may be used for the first node, and the method and/or the steps implemented by the second node may be alternatively implemented by a component (for example, a chip or a circuit) that may be used for the second node.

Optionally, an embodiment of this application further provides a communication apparatus. The communication apparatus is configured to implement the foregoing methods. The communication apparatus may be the first node in the foregoing method embodiment, an apparatus including the first node, or a component that may be used for the first node. Alternatively, the communication apparatus may be the second node in the foregoing method embodiment, an apparatus including the second node, or a component that may be used for the second node. It can be understood that, to implement the foregoing functions, the communication apparatus includes a corresponding hardware structure and/or software module for performing the functions. A person skilled in the art should be easily aware that, in combination with the units and algorithm steps in the examples described in embodiments disclosed in this specification, this application can be implemented in a form of hardware or a combination of hardware and computer software. Whether a function is performed by using hardware or by computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the communication apparatus may be obtained through division based on the foregoing method embodiment. For example, functional modules may be obtained through division in correspondence to functions, or two or more functions may be integrated into one processing module. The integrated module may be implemented in a form of hardware, or may be implemented in a form of a software functional module. It should be noted that division into modules in embodiments of this application is an example, is merely logical function division, and may be other division during actual implementation.

FIG. 10 is a diagram of a structure of a communication apparatus 100. The communication apparatus 100 may include a processing module 1001. Optionally, the communication apparatus 100 may further include a transceiver module 1002. The transceiver module may also be referred to as a transceiver unit, configured to implement sending and receiving functions. For example, the transceiver module may be a transceiver circuit, a communication interface, or a transceiver. For example, the communication apparatus 100 is the first node in the foregoing method embodiment.

The processing module 1001 may be configured to determine a second remaining packet delay budget PDB based on a first remaining PDB, where the first remaining PDB is a remaining PDB of a first service. The processing module 1001 may be further configured to determine a resource selection window based on the second remaining PDB. The processing module 1001 may be further configured to select, in the resource selection window, a resource for transmitting the first service to a second node. The first node is a node on a first path other than a destination node, the first path includes x nodes, and x is an integer greater than or equal to 3.

Optionally, when the first node is a source node, the transceiver module 1002 may be configured to transmit first signaling to an i^{th} node on the first path, where the first signaling indicates a first moment, and the first moment is a latest moment at which the first service arrives at the destination node, a deadline of the corresponding remaining PDB for transmitting the first service by the source node to the destination node, or a maximum value of a deadline of a resource selection time window of an (x-1)^{th} node. The source node is a 1^{st} node on the first path, the destination node is an x^{th} node on the first path, and i is an integer ranging from 2 to x-1.

Optionally, the transceiver module 1002 is further configured to transmit second signaling to the i^{th} node, where the second signaling includes a first hop count a, and the first hop count a is a hop count of the first service transmitted from the i^{th} node to the destination node along the first path. Optionally, when the first node is not a source node, the transceiver module 1002 is configured to obtain a first moment. The processing module 1001 is further configured to determine the first remaining PDB, where the first remaining PDB is equal to a time difference between the first moment and a second moment, and the second moment is a start moment or an end moment at which the first node receives a control channel or receives a data channel that carries the first service, the second moment is a moment at which the first node receives the first service and completes decoding, or the second moment is a moment at which the first node obtains the first moment and a remaining hop count of the first service on the first path.

Optionally, when the first node is a source node, the transceiver module 1002 is configured to send third signaling to an i^{th} node on the first path, where the third signaling includes a time identifier of a latest deadline of a resource selection window of the i^{th} node. The source node is a 1^{st} node on the first path, the destination node is an x^{th} node on the first path, i is an integer ranging from 2 to x-1, and the resource selection window of the i^{th} node is used to select a resource for sending the first service to a next-hop node that is of the i^{th} node and that is on the first path.

Optionally, when the first node is a source node, the transceiver module 1002 is configured to send fourth signaling to an i^{th} node on the first path, where the fourth signaling includes a time identifier of a moment at which the first node triggers resource selection, the second remaining PDB, and a second hop count b. The source node is a 1^{st} node on the first path, the destination node is an x^{th} node on the first path, and i is an integer ranging from 2 to x-1.

Optionally, the transceiver module 1002 is further configured to send fifth signaling to the i^{th} node, where the fifth signaling includes the second remaining PDB.

Optionally, the second node is a next-hop node that is of the first node and that is on a second path, the second path is a path from the first node to a third node, the second path includes y nodes, y is an integer greater than or equal to 3, and the third node is a next-hop node that is of the first node and that is on the first path. That the processing module 1001 is configured to determine a second remaining PDB based on a first remaining PDB specifically includes: The processing module 1001 is configured to: determine a third remaining PDB based on the first remaining PDB, and determine the second remaining PDB based on the third remaining PDB, where the third remaining PDB is a corresponding remaining PDB for transmitting the first service by the first node to the third node along the first path.

It should be noted that all related content of the steps in the foregoing method embodiment may be cited in function descriptions of corresponding functional modules. Details are not described herein again. The communication apparatus 100 provided in this embodiment may perform the multi-hop transmission method. Therefore, for technical effects that can be achieved by the communication apparatus 100, refer to the foregoing method embodiment. Details are not described herein again.

Optionally, the first node in this embodiment of this application may also be referred to as the communication apparatus, and may be a general-purpose device or a dedicated device. This is not specifically limited in embodiments of this application.

In this embodiment, the communication apparatus 100 is presented with the functional modules obtained through division in an integrated manner. The "module" herein may be a processor executing one or more software or firmware programs, a memory, an integrated logic circuit, and/or another device that can provide the foregoing functions. In a simple embodiment, a person skilled in the art can figure out that the communication apparatus 100 may use a form of the communication device 50 shown in FIG. 5.

For example, the processor 501 in the communication device 50 shown in FIG. 5 may invoke the computer-executable instructions stored in the memory 504, so that the communication device 50 performs the multi-hop transmission method in the foregoing method embodiment.

Specifically, function implementation processes of the processing module 1001 and the transceiver module 1002 in FIG. 10 may be implemented by the processor 501 in the communication device 50 shown in FIG. 5 by invoking the computer-executable instructions stored in the memory 504. Alternatively, a function implementation process of the processing module 1001 in FIG. 10 may be implemented by the processor 501 in the communication device 50 shown in FIG. 5 by invoking the computer-executable instructions stored in the memory 504, and a function implementation process of the transceiver module 1002 in FIG. 10 may be implemented by the communication interface 503 in the communication device 50 shown in FIG. 5.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application. A person of ordinary skill in the art can be aware that, in combination with the examples described in embodiments disclosed in this specification, units and algorithm steps can be implemented by electronic hardware or a combination of computer software and electronic hardware. Whether the functions are performed by using hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatus, and units described above, refer to the corresponding process in the method embodiment. Details are not described herein again.

In the several embodiments provided in this application, it should be understood that the disclosed systems, device, and method may be implemented in other manners. For example, the described device embodiment is merely an example. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the devices or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on actual requirements to achieve the objectives of the solutions of embodiments.

In addition, functional units in embodiments of this application may be integrated into one processing unit, each of the units may exist alone physically, or two or more units may be integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

Terms such as "component", "module", and "system" used in this application are used to indicate computer-related entities. The computer-related entities may be hardware, firmware, combinations of hardware and software, software, or running software. For example, a component may be but is not limited to a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may perform communication by using a local and/or remote process and based on, for example, a signal having one or more data packets (for example, data from one component, where the component interacts with another component in a local system or a distributed system, and/or interacts with another system via a network like an internet by using a signal).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used. Moreover, the term "example" in embodiments of this application is used to represent giving an example, an illustration, or a description. Any embodiment or design scheme described as an "example" in this application should not be construed as being preferred or having more advantages over other embodiments or design schemes. Exactly, a term "example" is used to present a concept in a specific manner.

In embodiments of this application, "information (information)", "signal (signal)", "message (message)", and "channel (channel)" may sometimes be used interchangeably. It should be noted that meanings expressed by the terms are consistent when differences of the terms are not emphasized. "Of (of)", "corresponding or relevant (corresponding, relevant)", and "corresponding (corresponding)" may sometimes be used interchangeably. It should be noted that meanings expressed by the terms are consistent when differences of the terms are not emphasized. "System" and "network" may sometimes be used interchangeably. Meanings expressed by the terms are consistent when differences of the terms are not emphasized. For example, "communication network" also refers to "communication system".

Network architectures and service scenarios that are described in embodiments of this application are intended to describe the technical solutions of embodiments of this application more clearly, but do not constitute any limitation on the technical solutions provided in embodiments of this application. A person of ordinary skill in the art can know that as the network architectures evolve and new service scenarios emerge, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-hop transmission method, wherein the method comprises:
determining, by a first node, a second remaining packet delay budget PDB based on a first remaining PDB, wherein the first remaining PDB is a remaining PDB of a first service;
determining, by the first node, a resource selection window based on the second remaining PDB; and
selecting, by the first node in the resource selection window, a resource for transmitting the first service to a second node; wherein
the first node is a node on a first path other than a destination node, the first path comprises x nodes, and x is an integer greater than or equal to 3.

2. The method according to claim 1, wherein if the first node is a source node, the method further comprises:
transmitting, by the first node, first signaling to an i^{th} node on the first path, wherein the first signaling indicates a first moment, and the first moment is a latest moment at which the first service arrives at the destination node, a deadline of the corresponding remaining PDB for transmitting the first service by the source node to the destination node, or a maximum value of a deadline of a resource selection time window of an (x-1)^{th} node; and
the source node is a node on the first path, the destination node is an x^{th} node on the first path, and i is an integer ranging from 2 to x-1.

3. The method according to claim 2, wherein the first signaling comprises a time identifier of the first moment, or the first signaling comprises a time identifier of a moment at which the first node triggers resource selection and the first remaining PDB, and a time difference between the first moment and the moment at which the first node triggers resource selection is equal to the first remaining PDB.

4. The method according to claim 2 or 3, wherein the method further comprises:
transmitting, by the first node, second signaling to the i^{th} node, wherein the second signaling comprises a first hop count a, and the first hop count a is a hop count of the first service transmitted from the i^{th} node to the destination node along the first path.

5. The method according to claim 1, wherein if the first node is not a source node, the method further comprises:
obtaining, by the first node, a first moment; and
determining, by the first node, the first remaining PDB, wherein the first remaining PDB is equal to a time difference between the first moment and a second moment, and the second moment is a start moment or an end moment at which the first node receives a control channel or receives a data channel that carries the first service, or the second moment is a moment at which the first node obtains the first moment and/or a remaining hop count of the first service on the first path.

6. The method according to claim 1, wherein if the first node is a source node, the method further comprises:
sending, by the first node, third signaling to an i^{th} node on the first path, wherein the third signaling comprises a time identifier of a latest deadline of a resource selection window of the i^{th} node; and
the source node is a node on the first path, the destination node is an x^{th} node on the first path, i is an integer ranging from 2 to x-1, and the resource selection window of the i^{th} node is used to select a resource for sending the first service to a next-hop node that is of the i^{th} node and that is on the first path.

7. The method according to claim 1, wherein if the first node is the source node, the method further comprises:
sending, by the first node, fourth signaling to an i^{th} node on the first path, wherein the fourth signaling comprises a time identifier of a moment at which the first node triggers resource selection, the second remaining PDB, and a second hop count b; and
the source node is a node on the first path, the destination node is an x^{th} node on the first path, and i is an integer ranging from 2 to x-1.

8. The method according to claim 4, wherein the method further comprises:
sending, by the first node, fifth signaling to the i^{th} node, wherein the fifth signaling comprises the second remaining PDB.

9. The method according to claim 6 or 7, wherein a time difference between the latest deadline of the resource selection window of the i^{th} node and the moment at which the first node triggers resource selection is equal to a product of the second remaining PDB and b, b is the second hop count, and the second hop count is a hop count of the first service transmitted from the source node to the i^{th} node along the first path.

10. The method according to claim 6 or 8, wherein a time difference between the first moment and the latest deadline of the resource selection window of the i^{th} node is equal to a product of the second remaining PDB and a-1; and
a is the first hop count, the first hop count is the hop count of the first service transmitted from the i^{th} node to the destination node along the first path, the first moment is the latest moment at which the first service arrives at the destination node, the deadline of the corresponding remaining PDB for transmitting the first service by the source node to the destination node, or the maximum value of the deadline of the resource selection time window of the (x-1)^{th} node, and the first hop count is the hop count of the first service transmitted from the i^{th} node to the destination node along the first path.

11. The method according to any one of claims 1 to 10, wherein the second node is a next-hop node that is of the first node and that is on the first path, the second remaining PDB is equal to a quotient of the first remaining PDB and the remaining hop count of the first service on the first path, and the remaining hop count of the first service on the first path is a hop count of the first service transmitted from the first node to the destination node along the first path.

12. The method according to any one of claims 1 to 5, wherein the second node is a next-hop node that is of the first node and that is on the first path, and the second remaining PDB is equal to the first remaining PDB.

13. The method according to claim 12, wherein a latest deadline of resource selection windows from the node to the (x-1)^{th} node on the first path is equal to the first moment.

14. The method according to any one of claims 1 to 6, wherein the second node is a next-hop node that is of the first node and that is on a second path, the second path is a path from the first node to a third node, the second path comprises y nodes, y is an integer greater than or equal to 3, and the third node is a next-hop node that is of the first node and that is on the first path; and
the determining, by a first node, a second remaining PDB based on a first remaining PDB comprises:
determining, by the first node, a third remaining PDB based on the first remaining PDB, and determining the second remaining PDB based on the third remaining PDB, wherein the third remaining PDB is a corresponding remaining PDB for transmitting the first service by the first node to the third node along the first path.

15. A communication apparatus, wherein the communication apparatus is used for a first node, and the communication apparatus comprises a processing module;
the processing module is configured to determine a second remaining packet delay budget PDB based on a first remaining PDB, wherein the first remaining PDB is a remaining PDB of a first service;
the processing module is further configured to determine a resource selection window based on the second remaining PDB; and
the processing module is further configured to select, in the resource selection window, a resource for transmitting the first service to a second node; wherein
the first node is a node on a first path other than a destination node, the first path comprises x nodes, and x is an integer greater than or equal to 3.

16. The communication apparatus according to claim 15, wherein the communication apparatus further comprises a transceiver module, and when the first node is a source node,
the transceiver module is configured to transmit first signaling to an i^{th} node on the first path, wherein the first signaling indicates a first moment, and the first moment is a latest moment at which the first service arrives at the destination node, a deadline of the corresponding remaining PDB for transmitting the first service by the source node to the destination node, or a maximum value of a deadline of a resource selection time window of an (x-1)^{th} node; and
the source node is a node on the first path, the destination node is an x^{th} node on the first path, and i is an integer ranging from 2 to x-1.

17. The communication apparatus according to claim 16, wherein the first signaling comprises a time identifier of the first moment, or the first signaling comprises a time identifier of a moment at which the first node triggers resource selection and the first remaining PDB, and a time difference between the first moment and the moment at which the first node triggers resource selection is equal to the first remaining PDB.

18. The communication apparatus according to claim 16 or 17, wherein
the transceiver module is further configured to transmit second signaling to the i^{th} node, wherein the second signaling comprises a first hop count a, and the first hop count a is a hop count of the first service transmitted from the i^{th} node to the destination node along the first path.

19. The communication apparatus according to claim 15, wherein the communication apparatus further comprises a transceiver module, and when the first node is not a source node,
the transceiver module is configured to obtain a first moment; and
the processing module is further configured to determine the first remaining PDB, wherein the first remaining PDB is equal to a time difference between the first moment and a second moment, and the second moment is a start moment or an end moment at which the first node receives a control channel or receives a data channel that carries the first service, or the second moment is a moment at which the first node obtains the first moment and/or a remaining hop count of the first service on the first path.

20. The communication apparatus according to claim 15, wherein the communication apparatus further comprises a transceiver module, and when the first node is a source node,
the transceiver module is configured to send third signaling to an i^{th} node on the first path, wherein the third signaling comprises a time identifier of a latest deadline of a resource selection window of the i^{th} node; and
the source node is a node on the first path, the destination node is an x^{th} node on the first path, i is an integer ranging from 2 to x-1, and the resource selection window of the i^{th} node is used to select a resource for sending the first service to a next-hop node that is of the i^{th} node and that is on the first path.

21. The communication apparatus according to claim 15, wherein the communication apparatus further comprises a transceiver module, and when the first node is a source node,
the transceiver module is configured to send fourth signaling to an i^{th} node on the first path, wherein the fourth signaling comprises a time identifier of a moment at which the first node triggers resource selection, the second remaining PDB, and a second hop count b; and
the source node is a node on the first path, the destination node is an x^{th} node on the first path, and i is an integer ranging from 2 to x-1.

22. The communication apparatus according to claim 18, wherein the transceiver module is further configured to send fifth signaling to the i^{th} node, wherein the fifth signaling comprises the second remaining PDB.

23. The communication apparatus according to claim 20 or 21, wherein a time difference between the latest deadline of the resource selection window of the i^{th} node and the moment at which the first node triggers resource selection is equal to a product of the second remaining PDB and b, b is the second hop count, and the second hop count is a hop count of the first service transmitted from the source node to the i^{th} node along the first path.

24. The communication apparatus according to claim 20 or 22, wherein a time difference between the first moment and the latest deadline of the resource selection window of the i^{th} node is equal to a product of the second remaining PDB and a-1; and
a is the first hop count, the first hop count is the hop count of the first service transmitted from the i^{th} node to the destination node along the first path, the first moment is the latest moment at which the first service arrives at the destination node, the deadline of the corresponding remaining PDB for transmitting the first service by the source node to the destination node, or the maximum value of the deadline of the resource selection time window of the (x-1)^{th} node, and the first hop count is the hop count of the first service transmitted from the i^{th} node to the destination node along the first path.

25. The communication apparatus according to any one of claims 15 to 24, wherein the second node is a next-hop node that is of the first node and that is on the first path, the second remaining PDB is equal to a quotient of the first remaining PDB and the remaining hop count of the first service on the first path, and the remaining hop count of the first service on the first path is a hop count of the first service transmitted from the first node to the destination node along the first path.

26. The communication apparatus according to any one of claims 15 to 19, wherein the second node is a next-hop node that is of the first node and that is on the first path, and the second remaining PDB is equal to the first remaining PDB.

27. The communication apparatus according to claim 26, wherein a latest deadline of resource selection windows from the 1^{st} node to the (x-1)^{th} node on the first path is equal to the first moment.

28. The communication apparatus according to any one of claims 15 to 20, wherein the second node is a next-hop node that is of the first node and that is on a second path, the second path is a path from the first node to a third node, the second path comprises y nodes, y is an integer greater than or equal to 3, and the third node is a next-hop node that is of the first node and that is on the first path; and
that the processing module is configured to determine a second remaining PDB based on a first remaining PDB specifically comprises:
the processing module is configured to: determine a third remaining PDB based on the first remaining PDB, and determine the second remaining PDB based on the third remaining PDB, wherein the third remaining PDB is a corresponding remaining PDB for transmitting the first service by the first node to the third node along the first path.

29. A communication apparatus, wherein the communication apparatus comprises a processor and a memory; and
the memory is configured to store computer-executable instructions, and when the processor executes the computer-executable instructions, the communication apparatus is enabled to perform the method according to any one of claims 1 to 14.

30. A communication apparatus, wherein the communication apparatus comprises a processor and an interface circuit; and
the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 14 by using a logic circuit or executing code instructions.

31. A computer-readable storage medium, wherein the computer-readable storage medium stores a computer program, and when the computer program is executed by a computer, the computer is enabled to perform the method according to any one of claims 1 to 14.

32. A computer program product, comprising instructions, wherein when the computer program product runs on a computer, the computer is enabled to perform the method according to any one of claims 1 to 14.
